(19) Europäisches Patentamt
European Patent Office
Office européen des brevets

(11) **EP 1 876 730 A1**

(12) **EUROPEAN PATENT APPLICATION**

(43) Date of publication:
**09.01.2008 Bulletin 2008/02**

(51) Int Cl.:
*H04B 7/26* (2006.01)

(21) Application number: **06116641.9**

(22) Date of filing: **05.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Koninklijke Philips Electronics N.V.**
**5621 BA  Eindhoven (NL)**

(72) Inventor: **The designation of the inventor has not yet been filed**

(74) Representative: **van der Veer, Johannis Leendert et al**
**Philips**
**Intellectual Property & Standards**
**P.O. Box 220**
**5600 AE  Eindhoven (NL)**

(54) **Bandwidth asymmetric communication system**

(57)    The present invention relates to a communication system comprising a plurality of terminals each having an uplink transmission unit (1) for transmitting radio frequency OFDM signals at a radio frequency and an access point having an uplink receiving unit (4) for concurrently receiving said radio frequency OFDM signals from at least two terminals, said OFDM signals being Orthogonal Frequency Division Multiplex (OFDM) modulated, wherein the bandwidth of said uplink transmission units and of the transmitted radio frequency OFDM signals is smaller than the bandwidth of said uplink receiving unit and that the bandwidth of at least two uplink transmission units and of their transmitted radio frequency OFDM signals is different. The present invention relates further to a communication system wherein the access point has a downlink transmission unit (7) for transmitting radio frequency OFDM signals at a radio frequency and that the at least two terminals each have a downlink receiving unit (11) for receiving said radio frequency OFDM signals, wherein the bandwidth of said downlink transmission unit is larger than the bandwidth of said downlink receiving units and that the downlink transmission unit is adapted to generate and transmit radio frequency OFDM signals having a bandwidth that is smaller than or equal to the bandwidth of the downlink transmission unit and that is equal to the bandwidth of the downlink receiving unit by which the radio frequency OFDM signals shall be received. Still further, the present invention relates to a communication method, to a terminal and to an access point for use in such a communication system.

FIG.1

## EP 1 876 730 A1

**Description**

FIELD OF THE INVENTION

The present invention relates to a communication system comprising a plurality of terminals each having an uplink transmission unit for transmitting radio frequency OFDM signals at a radio frequency and an access point having an uplink receiving unit for concurrently receiving said radio frequency OFDM signals from at least two terminals, said OFDM signals being Orthogonal Frequency Division Multiplex (OFDM) modulated.

The present invention relates further to a communication system wherein the access point has a downlink transmission unit for transmitting radio frequency OFDM signals at a radio frequency and that the at least two terminals each have a downlink receiving unit for receiving said radio frequency OFDM signals, wherein the downlink transmitting unit of said access unit is adapted for concurrently transmitting said radio frequency OFDM signals to said at least two downlink receiving units and wherein said downlink receiving units are adapted for receiving radio frequency OFDM signal concurrently sent from said downlink transmission unit.

Still further, the present invention relates to corresponding communication methods and to a terminal and an access point for use in such communication systems.

BACKGROUND OF THE INVENTION

All wireless communication systems known so far require both the access point (base station in a mobile telecommunication system) and the terminal (mobile station/terminal in a mobile telecommunication system) to operate at the same bandwidth. This has an economically negative consequence that a high-speed air interface cannot be cost- and power-consumption effectively used by low power and low cost terminals. Because of this traditional design, different air interfaces have to be used for different power and cost classes of terminals in order to cope with the different bandwidth, power consumption, bit rate and cost requirements. For example, Zigbee is used for very low power, low cost and low speed devices, such as wireless sensor, Bluetooth for wireless personal area network (WPAN) applications, and 802.11b/g/a for wireless local area network (WLAN) applications.

Orthogonal frequency division multiplexing (OFDM) systems are traditionally based on an Inverse Discrete Fourier Transform (IDFT) in the transmitter and a Discrete Fourier Transform (DFT) in the receiver, where the size of IDFT and DFT are the same. This means that if the access point (AP) is using a N-point DFT/IDFT (i.e. OFDM with N sub-carriers), the mobile terminal (MT) also has to use a N-point DFT/IDFT. Even in a multi-rate system, where the data-modulated sub-carriers are dynamically assigned to a MT according to the instant data rate of the application, the size of the MT-side DFT/IDFT is still fixed to the size of the AP-side IDFT/DFT. This has the consequence that the RF front-end bandwidth, the ADC/DAC (analog-digital-converter / digital-analog-converter) and baseband sampling rate are always the same for the AP and MT, even if the MT has much less user data to send per time unit. This makes it impossible in practice that a high-throughput AP / base station supports very low power, low cost and small-sized devices.

Further, applying spreading (like in Code Division Multiple Access (CDMA) systems) to OFDM is generally called Multi-Carrier CDMA (MC-CDMA), which is originally considered as spreading across sub-carriers for which various derivates, including spreading along sub-carriers, are known, e.g. from L. Hanzo, M. Muenster, B.J. Choi, T. Keller, "OFDM and MC-CDMA for Broadband Multi-User Communications, WLANs and Broadcasting", John Wiley & Sons, June 2004.

SUMMARY OF THE INVENTION

It is an object of the present invention to provide a communication system, a corresponding communication method and a terminal and an access point for use therein by which the implementation complexity and synchronization requirements can be reduced.

The object is achieved according to the present invention by a communication system as claimed in claim 1 which is characterized in that the bandwidth of said uplink transmission units and of the transmitted radio frequency OFDM signals is smaller than the bandwidth of said uplink receiving unit and that the bandwidth of at least two uplink transmission units and of their transmitted radio frequency OFDM signals is different and by a communication system as claimed in claim 2 which is characterized in that the bandwidth of said downlink transmission unit is larger than the bandwidth of said downlink receiving units and that the downlink transmission unit is adapted to generate and transmit radio frequency OFDM signals having a bandwidth that is smaller than or equal to the bandwidth of the downlink transmission unit and that is equal to the bandwidth of the downlink receiving unit by which the radio frequency OFDM signals shall be received.

A terminal, an access point and a communication method according to the present invention are defined in claims 9 to 37. Preferred embodiments of the terminal and the access point are defined in the dependent claims. It shall be understood that the communication system and method can be developed in the same or similar way as defined in the dependent claims of the terminal and the access point.

A paradigm shift is made in the proposed communication system design compared to known communication system designs. By exploiting a special property of OFDM and combining OFDM with other techniques it is made possible for the first time that a high bandwidth access point (base station) can support different bandwidth classes of (mobile) terminals. For example, a 1 Gbps @ 100 MHz access point of 1000 US$ can communicate with a 500 Mbps @ 50 MHz multimedia device of 200 US$ and with a 64 kpbs@10 kHz wireless sensor of 1 US$ in parallel.

Unlike the traditional OFDM systems design, where the AP and MT use the same bandwidth for the uplink transmission unit and the uplink receiving unit, in particular the same size of DFT/IDFT in said units, the new design proposed according to the present invention allows the MT to have the same or a smaller bandwidth than the AP, in particular to use the same or a smaller size of DFT/IDFT than the AP. Similarly, for downlink, the present invention allows the AP to communicate with MTs having the same or smaller bandwidth than the AP, in particular having the same or a smaller size of DFT/IDFT than the AP.

To explain this it shall first be recalled that a N-point DFT generates a discrete spectrum between the sub-carriers $-N/(2 T_s)$ and $N/(2 T_s)-1$, where $T_s$ is the OFDM symbol rate and N the size of DFT/IDFT. The positive most-frequent sub-carrier $N/(2T_s)$ is not included, for DFT represents a periodic spectrum. However, through investigations on the exploitation of a new property of DFT/IDFT to create a disruptive new OFDM system a new property of DFT/IDFT has been found, which is now summarized by the following two Lemmas.

Lemma 1: Let $X_{tx}(k)$ and $X_{rx}(k)$ denote the DFT spectral coefficients of the transmitter and receiver, respectively, where the transmitter uses a $N_{tx}$ point IDFT at sampling rate $F_{tx}$ to generate an OFDM signal x(t) of bandwidth $F_{tx}/2$, and the receiver uses $N_{rx}$ point DFT at sampling rate $F_{rx}$ to demodulate the received signal x(t). It holds $X_{rx}(k) = L X_{tx}(k)$ for $0 \leq k \leq .N_{tx}-1$, and $X_{rx}(k) = 0$ for $N_{tx} \leq k \leq N_{rx}-1$, if $N_{tx}=F_{tx}/f_\Delta=2^t$, $N_{rx}=F_{rx}/f_\Delta=2^r$, $r>t$, and $L= N_{rx}/ N_{tx} \geq 1$, where $f_\Delta$ is the sub-carrier spacing, which is set same for both the transmitter and receiver. Here, Lemma 1 is the theoretical foundation for uplink bandwidth asymmetry.

Lemma 2: Let $X_{tx}(k)$ and $X_{rx}(k)$ denote the DFT spectral coefficients of the transmitter and receiver, respectively, where the transmitter uses a $N_{tx}$ point IDFT at sampling rate $F_{tx}$ to generate an OFDM signal x(t) of bandwidth $F_{rx}/2$, and the receiver uses $N_{rx}$ point DFT at sampling rate $F_{rx}$ to demodulate the received signal x(t). It holds $X_{rx}(k) = X_{tx}(k) / L$ for $0 \leq k \leq .N_{rx}-1$, if $N_{tx}=F_{tx}/f_\Delta=2^t$, $N_{rx}=F_{rx}/f_\Delta=2^r$, $t>r$, and $L= N_{tx}/ N_{rx} \geq 1$, where $f_\Delta$ is the sub-carrier spacing, which is set same for both the transmitter and receiver. Here, Lemma 2 is the theoretical foundation for downlink bandwidth asymmetry.

With Lemma 1 a new type of OFDM systems can now be created, whose AP uses a single $N_{rx}$-point DFT or FFT to demodulate concurrently OFDM signals of different bandwidths that were OFDM-modulated in different MTs with $N_{tx\_i}$ point IDFTs or IFFTs, where i is the index of the MTs. The only preferred constraint is that the sub-carrier spacing $f_\Delta$ is the same for both AP and MT, and $N_{tx\_i}=2^{t-i}$, $N_{rx}=2^r$, $r \geq t\_i$.

With Lemma 2 a new type of OFDM systems can now be created, whose AP can use a single $N_{tx}$-point IDFT or IFFT to modulate concurrently OFDM signals of different bandwidths. These signals will be demodulated by MTs of different bandwidths by using $N_{rx\_i}$ point DFT or FFT, where i is the index of the MTs. The only preferred constraint is that the sub-carrier spacing $f_\Delta$ is the same for both AP and MT, and $N_{tx}=2^t$, $N_{rx\_i}=2^{r-i}$, $t \geq r\_i$.

Note, for simplicity of proofs the conventional DFT indexing rule for the above Lemmas 1 and 2 is not use, it is rather assumed that the index k runs from the most negative frequency (k=0) to the most positive frequency ($k=N_{tx}$ or N.). However, in the following description, the conventional DFT indexing rule is assumed again.

A smaller DFT size, in general a smaller bandwidth, means lower baseband and RF front-end bandwidth, which in turn means lower baseband complexity, lower power consumption and smaller terminal size. For the extreme case, the MT only uses the two lowest-frequent sub-carriers $f_o$ and $f_1$ of the AP, thus can be of very low power and cheap. The bandwidth asymmetric communication system is thus based on a new OFDM system design which results in a reduced uplink synchronization requirement, and low implementation complexity in the access point, in particular by sharing one DFT or FFT operation for all multi-bandwidth terminals.

Preferred embodiments of the invention are defined in the dependent claims. Claim 3 defines an embodiment of the communication system regarding the bandwidths, symbol length and guard intervals. Claims 12 to 15 define embodiments of the uplink transmission unit of the terminal, claims 22 to 28 define embodiments of the uplink receiving unit of the access point, claims 16 to 20 and 29 to 37 define corresponding embodiments for the downlink transmission unit and the downlink receiving unit.

The performance of the new system can be improved, if the access point sends or receives preambles regularly or on demand to/from the different mobile terminals as proposed according to an advantageous embodiment claimed in claims 4 and 5. In this embodiment a general downlink and uplink preamble design requirement is introduced and a set of specific preamble sequences meeting this requirement for MTs of different bandwidths is proposed.

Frame structure is always optimized for the communication system to be supported. It has great impact on the achievable system performance, including effective throughput, spectrum efficiency, service latency, robustness, and power consumption. For the new bandwidth asymmetric communication according to the present invention to work effectively, a new frame structure is proposed according to the embodiments of claims 6 and 7. Said superframe structure comprises a downlink period and an uplink period. The downlink synchronization sequence is bandwidth scalable, i.e. it must remain its good synchronization property even after BW adaptive reception/filtering by the MT.

Preferably, the downlink periods includes a number of common control channels for terminals of different bandwidths, the common control channels being used by the access point to transmit to the terminals. The common control channel is bandwidth scalable, i.e. it delivers all the necessary control information for a terminal of a given BW class even after BW adaptive reception/filtering by the MT.

The communication system according to the present invention is primarily provided for up and down communications, i.e. for the communications between the mobile terminal and the access point. If two MTs in the same cell want to talk to each other, the up and down communication is not spectrum efficient, because the data are sent twice over the air interface, one from the first MT to the access point, and the second from the access point to the second MT. One possibility to improve spectrum efficiency is to enable peer-to-peer communication, which means that the two MTs can talk to each other directly. This is proposed according to the embodiment of claim 8.

Conventionally, peer-to-peer communication is done without any involvement of the access point or the infrastructure. This is the case in 802.11b/g/a adhoc mode. However, the European standard Hiperlan-2 is the first WLAN standard, which introduces a centrally controlled peer-to-peer protocol. Here, a central controller is responsible for setting up a peer-to-peer connection and for assigning resources to it, while the data are exchanged directly between any two MTs. According to the proposed embodiment for peer-to-peer communication the access point is only involved during the peer-to-peer service registration phase. During the actual peer-to-peer communication phase the access point is not involved.

When the bandwidth asymmetric OFDM system proposed according to the present invention will be introduced in practice (e.g. for the 5 GHz band), it has to coexist with possibly existing known legacy OFDM systems used already in practice at the same band (e.g. the IEEE802.11a and IEEE802.11n systems). Furthermore, there may be a strong requirement that the AP can support user stations of both the new OFDM system and the already existing legacy system. Hence, further embodiments of the access point according to the present invention are proposed in claims 28, 36, 37 which will enable that the AP can operate either alternatively in one of the system modes, or operate concurrently in both system modes, even in the same frequency band. Preferably, the functional blocks of the transmitter and receiver architecture as defined above are reused by the AP to support the user stations (MTs) of the legacy OFDM system, in addition to the user stations of the new bandwidth asymmetric OFDM system.

With the communication system according to the present invention a terminal is able to establish one or more connections. For example, one connection can be used for voice, and another connection for video to realize a video phone; or one connection for control, and another connection for image/video data of an online game application.

According to still a further embodiment spreading and scrambling are applied along the subcarriers or across the subcarriers of the frequency domain OFDM source signals, both in the terminal and the access point and, generally, for uplink and downlink communications.

Because spreading and scrambling is done along the time axis (if spreading is done along sub-carriers), it is just a specific operation on the bandwidth-reduced source signal. The bandwidth of a baseband signal has no direct relation to the required speed of the baseband process. The processing of a lower bandwidth signal may require a higher speed of the baseband process than the processing of a higher bandwidth signal, if the operation on the former signal is much more complicated. But, in general there is a trend that the required speed of the baseband processor increases with the bandwidth of the signal to be processed (assuming similar operations on the two signals of different bandwidths).

If the OVSF spreading code is applied along the sub-carriers, the OVSF spreading means will generate K frequency domain OFDM source signals (one OFDM signal corresponds to one OFDM symbol block) from one un-spread frequency domain OFDM source signal by repeating this un-spread frequency domain OFDM signal K time along the time axis and multiplying the sub-carrier of the i-th (out of these K OFDM signals) frequency domain OFDM signal with the i-th sampling point value of the OVSF spreading code. The OVSF code is preferably chosen differently for the different connection to be multiplexed, but can be independent of the index (frequency) of the sub-carrier, and has a length of K. The scrambling means will take NxK so spread frequency domain OFDM signals from the OVSF spreading means and multiply the sub-carriers of the i-th (out of NxK these OFDM signals) frequency domain OFDM signal with the i-th sampling point values of the sub-carrier index dependent scrambling codes of length NxK. As a special case, the scrambling codes can be made the same for the different sub-carrier indices. However, the scrambling codes is preferably be chosen differently for the different access points, in both uplink and downlink directions.

If the OVSF spreading code is applied across the sub-carriers, the OVSF spreading means will generate K different sub-carriers out of one unspread sub-carrier for the same frequency domain OFDM signal by placing this un-spread sub-carrier at K different frequency indices and multiplying the i-th sub-carrier (out of these K sub-carriers) with the i-the sampling point value of the OVSF spreading code. The OVSF code is preferably chosen differently for the different connections to be multiplexed, and has a length of K. The scrambling means will take N so spread frequency domain OFDM signals from the OVSF spreading means and multiply the sub-carriers of the i-th (out ofN these OFDM signals) frequency domain OFDM signal with the i-th sampling point values of the sub-carrier index dependent scrambling codes of length N. As a special case, the scrambling codes can be made the same for the different sub-carrier indices. However, the scrambling codes is preferably chosen differently for the different access points, in both uplink and downlink directions.

According to still a further embodiment reconstruction means are provided which are adapted for obtaining the information of the value of $N_{u\_tx}$ from an information included in the received radio frequency OFDM signal indicating said value or by analyzing the bandwidth of the received radio frequency OFDM signal. It is assumed that the access point knows that there are potentially many bandwidth classes. Within each bandwidth it has to do all the windowing & combining, despreading and descrambling operations to detect if a MT belonging to the considered BW class has sent a signal. Alternatively, it gets this information from the upper layer. Detecting the activity within the bandwidth class is not enough. For example, a larger bandwidth MT may generate activities for all bandwidth classes below its bandwidth. It should further be noted that offset estimations (time and frequency domain), offset compensation, and channel equalization are preferably done for each MT individually.

BRIEF DESCRIPTION OF THE DRAWINGS

The invention will now be explained in more detail with reference to the drawings in which:

Fig. 1 shows a block diagram of a transmitter architecture for uplink,
Figs. 2 and 3 illustrate the signal flow in the transmitter for uplink,
Fig. 4 shows a block diagram of a receiver architecture for uplink,
Figs. 5 and 6 illustrate the signal flow in the receiver for uplink,
Fig. 7 shows a block diagram of a transmitter architecture for downlink,
Figs. 8 to 10 illustrate the signal flow in the transmitter for downlink,
Fig. 11 shows a block diagram of a receiver architecture for downlink,
Fig. 12 illustrates the signal flow in the receiver for downlink,
Fig. 13 shows a tree structure defining OVSF codes,
Fig. 14 shows the use of OVSF codes in a tree structure,
Figs. 15 to 17 illustrate spreading along sub-carriers,
Figs. 18 to 20 illustrate spreading across sub-carriers,
Fig. 21 illustrates how the different bandwidth classes share the different spectral coefficients,
Fig. 22 shows an example of the preamble design, starting with a Gold sequence for the largest bandwidth class with 12 samples,
Fig. 23 shows a block diagram of an embodiment of a transmitter architecture for uplink with preamble insertion,
Fig. 24 shows a block diagram of an embodiment of a transmitter architecture for downlink with preamble insertion,
Fig. 25 shows a block diagram of an embodiment of a receiver architecture for uplink enabling alternating use with existing communication systems,
Fig. 26 shows a block diagram of an embodiment of a transmitter architecture for downlink enabling alternating use with existing communication systems,
Fig. 27 shows a block diagram of an embodiment of a receiver architecture for uplink enabling concurrent use with existing communication systems,
Fig. 28 shows the structure of a superframe,
Fig. 29 shows a simple block diagram of a communications system in which the present invention can be used.

DETAILED DESCRIPTION OF EMBODIMENTS

General layout for uplink

It is known that uplink synchronization is very challenging for any OFDM system. With bandwidth asymmetric OFDM this problem would be even worse, because the miss-match between the sampling rates and low-pass filters in the access point and different terminals would further increase the degree of out of sync in a practical implementation. In an OFDM system the term synchronization covers clock, frequency, phase and timing synchronization. In general, both OFDM symbol and frame synchronization shall be taken into account when referring to timing synchronization. By the means of an innovative combination of techniques, as will become apparent from the below described embodiments, the communication system according to the invention is made robust to practical jitters in frequency, phase, clock, and timing. Conventional MC-CDMA systems do spreading across sub-carriers, which requires excellent frequency, clock and timing synchronization and very small Doppler shift to maintain the orthogonality between the spreading codes.

Though it is known that ICI would not violate orthogonality between spreading codes, if the spreading is not done across sub-carriers, rather along each sub-carrier, the timing synchronization between the channel encoded symbols from different terminals is, in general, still required in the AP to assure orthogonality between the spreading codes from different terminals.

Generally, the invention relates to a communication system including at least one access point, such as a base station in a telecommunications network, and at least one terminal, such as at least one mobile phone in a telecommunications network. While generally the terminals associated with the access point(s) in known communication systems necessarily need to have identical bandwidths in order to be able to communicate with each other, this is not required in the system according to the present invention.

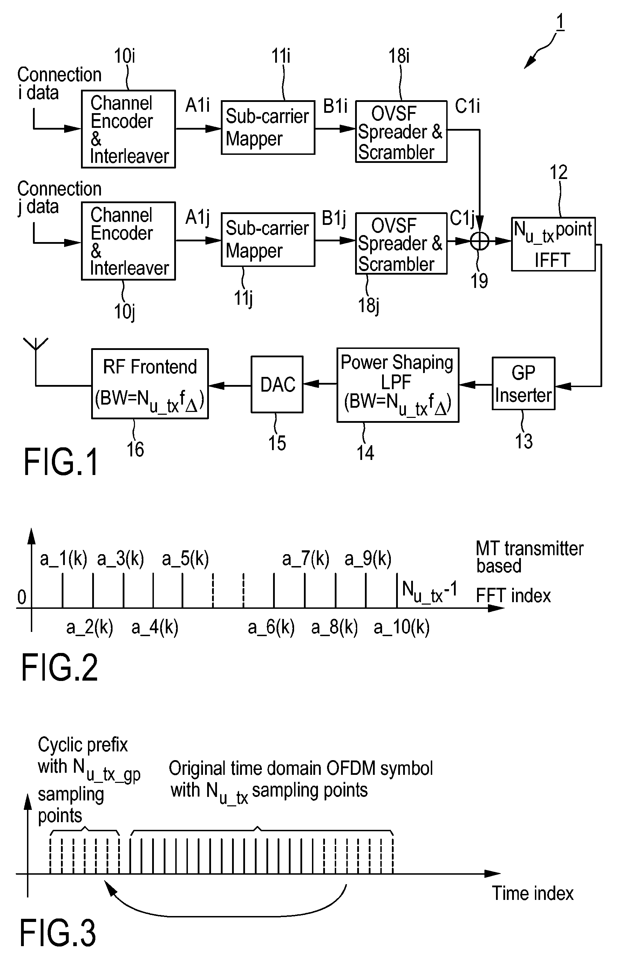

The new transmitter concept offers the flexibility to adapt the OFDM modulation and spreading to the rate of each user connection in the MT. Fig. 1 shows a block diagram of a transmitter architecture for uplink, i.e. the schematic layout of the uplink transmission unit 1 of a user terminal (MT) of a specific bandwidth class for two user connections i and j according to the present invention for use in a basic asymmetric OFDM communication system. For each user connection any adaptive or non-adaptive channel encoder and interleaver 10i, 10j can be applied. Upon reception of application data, said channel encoder and interleaver 101, 10j (generally called uplink symbol generation means) generate complex (I/Q) valued channel encoded data. It shall be noted that real-valued symbols are regarded here as a special case of complex valued data symbols with the imaginary Q-component being zero. For each new start of the spreading process for the considered connection i, a sub-carrier mapper 11i gets mi channel encoded data symbols from the channel encoder and interleaver 10i for connection i, where mi is smaller than or equal to $N_{u\_tx}$, which is the size of the bandwidth class specific IFFT of the terminal.

A1i denotes the input vector to the sub-carrier mapper 11i, which contains mi symbols as its components. During the call set up phase for connection i, the terminal agrees with the access point on a common pseudo-random sequence to change the mapping of the mi data symbols of A1 onto mi out of $N_{u\_tx}$ sub-carriers of IFFT. As a trade-off between diversity gain and computing demand, the change of sub-carrier mapping is not done OFDM symbol by OFDM symbol, rather time slot by time slot. Within each time slot the same mi out of $N_{u\_tx}$ sub-carriers are used for each input vector A1i of connection i. Further, the length of the time slots shall be set such that it is an integer multiple of all possible OVSF code lengths. After OVSF spreading and scrambling the sub-carriers of different connections can be added together to build a complete OFDM symbol with $N_{u\_tx}$ sub-carriers in total.

Like conventional OFDM systems, it is required that a small fractional of the total $N_{u\_tx}$ sub-carriers, which sit around the $N_{u\_tx}/2$-th coefficient of the IFFT and represent the highest-frequent sub-carriers in the OFDM symbol, are not used for any user connection. This is because the windowing function in the time domain results in an extension of the modulated signal spectrum and would introduce ICI, if this measure were not taken.

The multiplexing of variable rate connections is done on the same sub-carriers by applying OVSF cods in the following way. All used sub-carriers of a connection are spread by the same OVSF code. The OVSF code length of $2^s$, $s \geq 0$, determines the spreading factor for a connection. Because OVSF codes of length $2^s$ are constructed from the OVSF codes of length $2^{s-1}$, OVSF codes cannot be selected independently to maintain orthogonality. How to do the spreading along sub-carriers will be explained below.

Let B1i denote the input vector to the OVSF spreading and scrambling unit 101, which contains the mi IFFT coefficients for connection i. Suppose the q-th OVSF code of length p is used for connection i, and this OVSF code is represented as $C_{p,q} = \{b_0, b_1, ..., b_{p-1}\}$, the OVSF spreading and scrambling unit 18i repeats its input vector p times and multiplies each repeated B1i with the chips $b_c$ of $C_{p,q}$, c=0,..,p-1. That means that each input vector B1i for connection i will be spread by $C_{p,q}$ over p consecutive OFDM symbols.

The spreading operation is followed immediately by scrambling. The scrambling codes are different for different MTs and different for different sub-carriers within a MT. Because the OVSF codes are only used to differ connections within a MT, different scrambling codes are used to differ MTs at the AP. In addition to this, it is preferably proposed to use different scrambling codes for different sub-carriers to support ICI estimation, since with sub-carrier specific scrambling codes the receiver has a mark to detect if the data sent on sub-carrier $f_i$ is spread over to sub-carrier $f_j$ due to clock/frequency offset, or Doubler shift.

The scrambling code length can be set to the length of the time slot (e.g. 1ms), or to the maximum length of the applied OVSF codes, the former is preferred to make the scrambling process more random. For a system with M MTs and $N_{u\_rx}$ sub-carriers in total, $M N_{u\_rx}$ different uplink scrambling codes are needed. Like in W-CDMA, the different scrambling codes can be generated from a very long Gold sequence.

Suppose B1i is to be spread by $C_{p,q} = \{b_0, b_1, ..., b_{p-1}\}$ in the OVSF spreading and scrambling unit 18i, and the following p chips of the scrambling code for the k-th component of B1i is $S_k = \{s_{k\_0}, ..., s_{k\_p-1}\}$, the OVSF spreading and scrambling unit 18i will deliver p output vectors C1i_c, c=0, ..., p-1, for each input vector B1i. The k-th component of the c-th output vector Cli_c is obtained by multiplying the k-th component of B1i with $b_c s_{k\_c}$. That means the spreading and scrambling operations can be combined by one multiplication with $b_c s_{k\_c}$, for each chip.

An adder 19 adds the output vectors C1i_c for the different connections with respect to the used sub-carriers.

The sum of $C1i_c$ for all connections i undergoes an $N_{u\_tx}$-point IFFT in unit 12 to generate an OFDM symbol of maximum bandwidth $N_{u\_tx} f_\Delta$. Optionally, a pre-equalization can be executed between the connection adder 19 and the IFFT unit 12 by exploiting the downlink channel estimates because of the reciprocity of the TDD channel.

A guard period (GP) is inserted in a guard period insertion unit 13 after the IFFT by a fractional cyclic extension of the connection multiplexed OFDM symbol. To achieve a concurrent OFDM demodulation with a single FFT unit for different MTs of different bandwidths, the guard period is preferably the same for all MTs. The GP insertion is followed by a power-shaping filter 14 to limit the out-of-band transmission power, and by a conventional digital-analog-converter (DAC) 15 and a conventional RF front-end (RF transmission unit) 16, which are both optimized for bandwidth $N_{u\_tx} f_\Delta$.

Let the GP contain Ng samples. The number of sub-carriers m and the spreading factor p assigned to a user connection determines the effective OFDM symbol rate $R_o$ for this connection. Inclusive GP, each OFDM sub-carrier lasts $(N_{u\_tx}+N_g)/ (N_{u\_tx} f_\Delta)$ seconds. Therefore, $R_o=m f_\Delta N_{u\_tx}/(p(N_{u\_tx}+N_g))$. The upper layer control protocol must make sure that the average data symbol rate for this connection at the output of the channel encoder & interleaver 10i, 10j does not exceed this effective OFDM symbol rate. If $f_\Delta$ and GP are set to the sub-carrier spacing and long GP values of IEEE802.11a, and the maximum OVSF spreading factor is limited to 256, it can be shown that the effective OFDM symbol rate per sub-carrier for any bandwidth class of MTs is $f_\Delta/(p(1+GP f_\Delta))$ = 976,7 data symbol/sub-carrier/second.

After Lemmas 1 and 2 there will be an amplitude-scaling factor $L= N_{u\_rx}/ N_{u\_tx}$ between the inserted sub-carriers in the transmitter and the restored sub-carriers in the receiver due to the difference in FFT sampling rates. Yet, it is not necessary to have a separate block for this amplitude normalization, because through a closed-loop power control for each MT, enabled by a dedicated superframe which will be described below, this amplitude normalization will be automatically done.

It shall be noted for clarification that the channel encoder and interleavers 10i, 10j, the sub-carrier mappers 11i, 11j and the OVSF spreading and scrambling means 18i, 18j are generally also called OFDM coding means, and the OFDM coding means and the IFFT unit 12 are generally also called OFDM modulation means.

To illustrate signal flows in the above described scheme an output data sequence at channel encoder and interleaver 10i shall be assumed to be A(1), A(2), A(3), A(4), A(5), ..., where A(k)=(a_1(k), a_2(k), ...a_mi(k))$^T$ is a vector with mi complex components. The real and the imaginary parts of each component a_1(k) represent the I- and Q-components of the channel encoded data symbol, respectively. The sequence A(k) is preferably stored in an output FIFO queue of the channel encoder and interleaver 10i, and will be read out by the sub-carrier mapper 11 i on demand.

For each output vector A1(k) of the channel encoder and interleaver 10i, the sub-carrier mapper 11j maps its m components $a_1\_p(k)$, p=1,..mi, onto mi out of $N_{u\_tx}$ sub-carriers of the transmitter in the considered terminal obtaining B1(k). The DC sub-carrier and some highest-frequent sub-carriers with positive and negative sign may not be used. A possible mapping in sub-carrier mapper 11i for mi=10 is illustrated in Fig. 2.

After OVSF spreading and scrambling by unit 18j, each so constructed output data symbol C1(k) is an OFDM symbol in the frequency domain. The $N_{u\_tx}$-point IFFT transformer 12 transforms the OFDM symbol in the frequency domain into an OFDM symbol in the time domain. The GP inserter 13 adds a cyclic prefix taken from the last $N_{u\_tx\_gp}$ samples of the time domain OFDM symbol or $N_{u\_tx\_gp}$ zero-valued samples to the time domain OFDM symbol. Fig. 3 illustrates the adding of a cyclic prefix to the time domain OFDM symbol.

The so constructed OFDM symbol with guard period undergoes a digital low-pass filtering for power shaping. This power-shaping LPF 14 may or may not be sampled at a higher sampling rate than the sampling rate of the time domain OFDM symbol.

General layout for uplink receiver

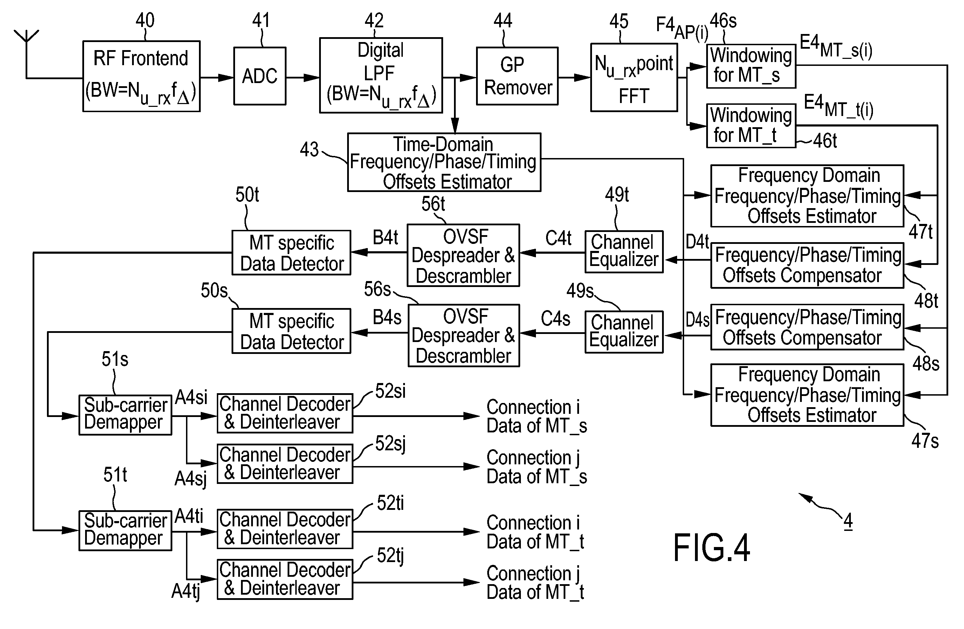

Fig. 4 shows a block diagram of a receiver architecture for uplink, i.e. the schematic layout of the uplink receiving unit 4 of an access point (AP) according to the present invention for use in an asymmetric OFDM communication system for the concurrent OFDM-demodulation with a single FFT unit of the maximum size $N_{u\_rx}$ for all MTs of different bandwidths $N_{u\_tx\_k} f_\Delta$. Thanks to the frequency, phase and timing offsets feedback from the AP, the OFDM signals from the different MTs arrive at the AP in quasi-synchronization.

A conventional RF front-end 40 and a conventional analog-digital converter (ADC) 41, which are dimensioned for the maximum bandwidth of $N_{u\_rx} f_\Delta$, receive the mixed RF signals from different MTs, and convert the signals to digital format.

The ADC 41 may do over-sampling to support the following digital low-pass filter (LPF) 42, whose edge frequency is dimensioned for the maximum bandwidth of $N_{u\_rx} f_\Delta$, rather than for the terminal specific bandwidth of $N_{u\_tx\_k} f_\Delta$. The digital LPF 42 in the time domain is common for all bandwidth classes. If the ADC 41 is doing over-sampling to support the digital LPF 42, the digital LPF will do the reverse down-sampling to restore the required common (maximum) receiver sampling rate of $N_{u\_rx} f_\Delta$.

Depending on the synchronization requirement, a MT may or may not send MT-specific preambles, which could be frequency-, code- or time-multiplexed with the preambles from other MTs. If at least one MT is sending preamble, e.g. in a superframe (described below), a time-domain frequency/phase/timing offsets estimator 43 performs the frequency, phase, and timing acquisition and tracking based on the special bit pattern in the preamble. The time-domain frequency/phase/timing offsets estimator 43 could be removed, if the quasi-synchronization enabled by the proposed combination of techniques is good enough for the required demodulation performance.

After time-domain frequency/phase/timing offsets estimator 43 the guard period is removed by a GP remover 44, and the remaining $N_{u\_rx}$ samples undergo a concurrent FFT with an $N_{u\_rx}$ point FFT unit 45. It should be noted that $N_{u\_rx}$ is the maximum FFT size that is supported by the system.

After said FFT, MT specific operations are carried out. Without loss of generality, only two MTs of different bandwidth classes with indices s and t are shown in Fig. 4. In the following MT_t is taken as an example to explain how the MT specific operations are performed. Firstly, the MT specific sub-carriers need to be extracted from the $N_{u\_rx}$ FFT coefficients, what is done in the windowing for MT_t unit 46t. Because the first $N_{u\_tx\_t}/2$ coefficients of an $N_{u\_rx}$-point FFT represent the $N_{u\_tx\_t}/2$ least-frequent sub-carriers with positive sign (including the DC) and the last $N_{u\_tx\_t}/2$ coefficients of an $N_{u\_rx}$-point FFT represent the $N_{u\_tx\_t}/2$ least-frequent sub-carriers with negative sign in the OFDM signal, the following FFT index mapping is done to extract $N_{u\_tx\_t}$ sub-carriers for MT_t out of the entire $N_{u\_rx}$ FFT coefficients (MT meaning terminal and AP meaning access point):

$$E4_{MT\_t}(i) = F4_{AP}(i), \qquad\qquad if\ 0 \leq i \leq N_{u\_tx\_t}/2 - 1$$

$$E4_{MT\_t}(i) = F4_{AP}(N_{u\_rx} - N_{u\_tx\_t} + i), \qquad if\ N_{u\_tx\_t}/2 \leq i \leq N_{u\_tx\_t} - 1$$

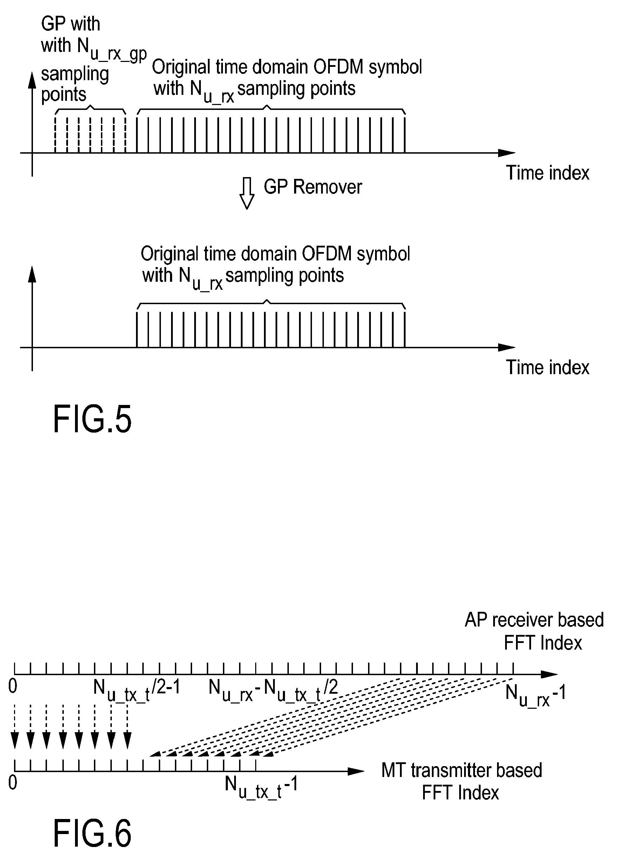

This mapping is illustrated in Fig. 6.

Above, $F4_{AP}(i)$ denotes the i-th FFT coefficient obtained in the access point after the $N_{u\_rx}$ point FFT, and $E4_{MT\_t}(i)$ denotes the i-th FFT coefficient that were generated in the terminal MT_t. With this mapping the complete $N_{u\_tx\_t}$ FFT coefficients generated in the MT_t are extracted and put in the right order, as if they were obtained by a conventional $Nu_{\_tx\_t}$ point FFT. $E4_{MT\_t}$ contains the sub-carriers up to the bandwidth of the considered device MT_t, on which the connections of other MTs may be OVSF code multiplexed.

However, in a practical system the power-shaping filter 14 (see Fig. 1) in the transmitter is not ideal. Usually, a (Root Raised Co-Sine) RRC or RC (Raised CoSine) filter is applied, which will extend the original OFDM spectrum of the used sub-carriers to adjacent bands, which will result in spreading of received useful signal energy to other sub-carriers than the first $N_{u\_tx}/2$ and last $N_{u\_tx}/2$ sub-carriers in Fig. 6. Therefore, in general, a windowing and mixing operation needs to be applied instead of the above simple windowing operation for the discussed ideal case.

Hence, the bandwidth class specific windowing & mixing unit 26 in a preferred embodiment selects K/2 first and K/2 last FFT coefficients out of the $N_{u\_rx}$ FFT coefficients $F_{AP}$ from the $N_{u\_rx}$-point FFT unit 25 in Fig. 4, where $N_{u\_tx\_t} \leq K \leq N_{u\_rx}$. The i-th FFT coefficient $E4_{MT\_t}(i)$ of the transmitted OFDM symbol from the considered terminal is reconstructed by a linear or non-linear filter operation on these K FFT coefficients in the receiver. In general, this operation can be expressed as

$$E4_{MT\_t}(i) = function\ (F_{AP}(m),\ F_{AP}(n)),$$

for all m, n with $0 \leq m \leq K/2 - 1$, $N_{u\_rx} - K/2 \leq n \leq N_{u\_rx} - 1$.

If MT-specific pilot tones are considered in the system, a terminal-specific frequency-domain frequency/phase/timing offsets estimator 47t is provided for executing another frequency/phase/timing offsets estimation in the frequency domain. The pilot tones of different MTs can be frequency-, code- or time-multiplexed. A MT may send preambles and/or pilot tones, or neither, depending on the performance requirement. A preamble may be constructed such that it also carries pilot tones for channel estimation and additional frequency/phase/timing tracking in the frequency domain. The frequency-domain frequency/phase/timing offsets estimator 47t also utilizes the results from the time-domain frequency/phase/timing offsets estimator 43 to increase the precision and confidence of the estimation. Further, a frequency/phase/timing offsets compensator 48t is provided which exploits the final frequency/phase/timing estimation results for the considered terminal MT_t to compensate for the offsets on the modulated sub-carriers in $E4_{MT\_t}(i)$. Furthermore, the access point may feed back the final frequency/phase/timing estimation results to the terminal MT_t via the control information conveyed in a downlink channel.

A terminal-specific channel equalization is executed in a channel equalizer 49t on the output vector D4t of the frequency/phase/timing offsets compensator 48t, because its result is more reliable on D4t, rather than $E4_{MT}$ (i), after the frequency/phase/timing offsets are cleaned up. The channel equalizer 49t delivers an output vector C4t, which contains all possible sub-carriers of the terminal MT_t. The OVSF despreader & descrambler 56t demultiplexes the different user connections by a combined despreading and descrambling operation per sub-carrier with the corresponding OVSF and scrambling codes. For a user connection with spreading factor p, the OVSF despreader & descrambler 56t must multiply the values on each of the used sub-carriers from p consecutive C4t with the corresponding chips of the OVSF code and the chips of the scrambling code. The output vector B4t of OVSF despreader & descrambler 56t contains not only the indices of all sub-carriers of MT_t, but also the despreading and descrambling results for all possible connections on each sub-carrier.

Here, despreading along sub-carriers has been explained. But it shall be noted that despreading can also be applied across sub-carriers instead. Both methods, in particular the differences, will be explained in more detail below.

Because the latter are still affected by noise and interferences, in general, a terminal-specific data detector 50t (e.g. MLSE) can be applied to statistically optimize the demodulation result for each used sub-carrier. The statistically optimized detection result B4t is delivered to the sub-carrier demapper 51t, which reconstructs the mi data symbols (i.e. complex valued channel encoded symbols) as the components of A4ti for each connection i of the considered terminal MT_t. Finally, the data symbols are de-interleaved and channel-decoded in a channel decoder and deinterleaver 52ti to obtain the original upper layer data signal.

Multi-User-Detection (MUD) has been proposed in the literature to combat out-of-sync for conventional MC-CDMA systems. The improvement depends on the degree of out-of-sync and other design parameters. MUD is very computing intensive, which is avoided in the here proposed scheme, because the intrinsic uplink synchronization requirement has been removed through the proposed combination of techniques, and, nonetheless, a number of mechanisms has been introduced to obtain a good quasi-synchronization for concurrent FFT. However, MUD can still be applied with the proposed scheme. One possibility is to apply MUD to the output vector $F4_{AP}$(i) of the concurrent FFT. $F4_{AP}$(i) contains the complete information from all MTs for MUD to exploit. Another possibility is to apply MUD to the despreading and descrambling results B4t, B4s for all MTs. In this case a cross-MT MUD unit shall replace the MT-specific data detection units 50t, 50s in Fig. 4.

The reconstruction units 46t, 46s, OVSF despreading and descrambling units 56t, 56s, the sub-carrier demappers 51t, 51s s and the channel decoder and deinterleavers 52t, 52s are generally also called uplink OFDM restoration means, and the FFT unit 55 and the uplink OFDM restoration means are generally also called uplink OFDM demodulation means.

Next, signal flows in the above described scheme shall be explained. Because in the access point the receiver 40 has a higher bandwidth and the baseband a higher sampling rate than the transmitter in the terminal, the received time domain OFDM symbol with guard period will contain $N_{u\_rx}+N_{u\_rx\_gp}$ sampling points, with $N_{u\_rx}/N_{u\_tx}$ = $N_{u\_rx\_gp}/N_{u\_tx\_gp} = 2^k$, in general. However, the absolute time duration of the time domain OFDM symbol and its guard period is the same as that generated by the transmitter in the terminal, because the receiver is sampled at a $2^k$ times higher rate.

The GP remover 44 removes the $N_{u\_rx\_gp}$ preceding samples from each time domain OFDM symbol with guard interval, as is illustrated in Fig. 5.

The $N_{u\_rx}$-point FFT transformer 45 transforms the time domain OFDM symbol without guard period to an OFDM symbol in the frequency domain. The original $N_{u\_tx}$ OFDM sub-carriers transmitted by the terminal are reconstructed by taking the first $N_{u\_tx}/2$ samples and the last $N_{u\_tx}/2$ samples out of the $N_{u\_rx}$ spectral coefficients of the $N_{u\_rx}$-point FFT, as is illustrated in Fig. 6, or by a more sophisticated frequency domain filtering operation.

The so re-constructed bandwidth class specific FFT window based OFDM symbol $F4_{AP}$(i) undergoes first MT transmitter specific processing in frequency/phase/timing offset compensation, channel equalization, OVSF despreading & descrambling and data detection. Then, considering only the path for MT t, the sub-carrier demapper 51t maps the m reconstructed data sub-carriers of each frequency domain OFDM symbol B4t(k) to mi and mj channel encoded data symbols a_1(k), a_2(k), ... a_mi(k) and a_1(k), a_2(k), ... a_mj(k) for further processing by the channel decoder and deinterleavers 52ti, 52tj.

General layout for downlink transmitter

Next, embodiments of the transmitter and receiver architecture for downlink shall be explained. Let the k-th bandwidth class of terminals be defined as the class of terminals, whose FFT/IFFT has only $N_{d\_rx\_k}=2^k$ coefficients, and whose baseband sampling rate is $N_{d\_rx\_k} f_\Delta$. Let the OFDM sampling rate in the access point be $N_{d\_tx} f_\Delta$, where $N_{d\_tx}$ is the size of the FFT engine for the OFDM modulation, then it holds for downlink L= $N_{d\_tx}/ N_{d\_rx\_k} \geq 1$.

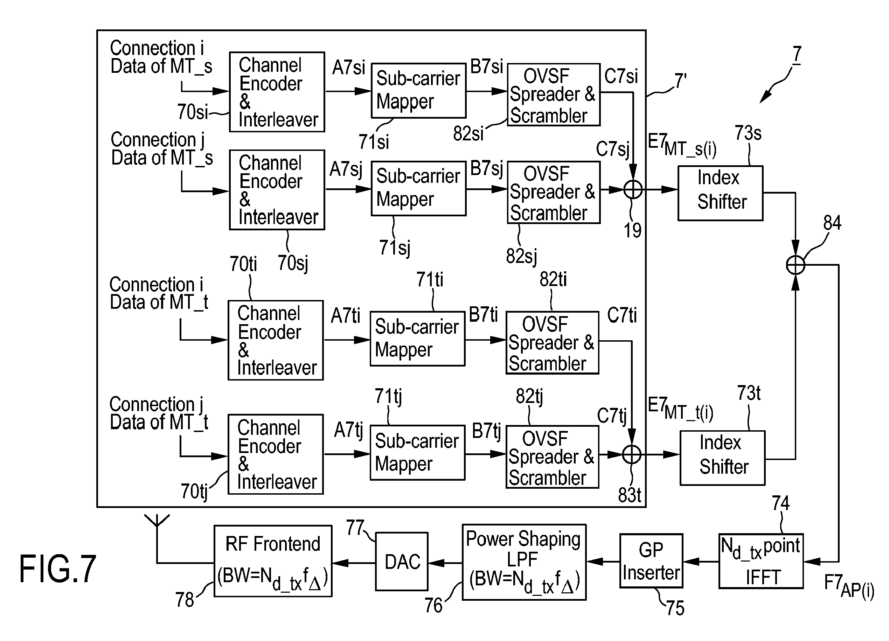

Fig. 7 shows a block diagram of a transmitter architecture for downlink, i.e. the schematic layout of the downlink transmission unit 7 of an access point according to the present invention for use in the asymmetric OFDM communication system, which resembles much the uplink transmitter block diagram shown in Fig. 1. The difference is that the AP has to instantiate one transmitter for each active MT in downlink, and different transmitters have different bandwidths. The technical challenge here is to do concurrent OFDM modulation for all receivers (i.e. MTs) of different bandwidths. Block 7' of Fig. 7 contains terminal (thus bandwidth)-specific operations only.

Without loss of generality, Fig. 7 only shows transmitter instantiations for two MTs, MT_s and MT_t, which are of different bandwidth classes s and t. Taking MT_t of bandwidth class t as an example, the sub-carrier mapper maps the mj incoming data symbols in A7tj from the channel encoder & interleaver 70tj onto maximum $\alpha N_{d\_rx\_t}$ sub-carriers, where $0<\alpha<1$ reflects the fact that a small fraction of the highest-frequent sub-carriers with both positive and negative signs should not be used to avoid ICI caused by the spectral extension due to time-domain windowing. The conventional FFT-coefficient indexing rule for an $N_{d\_rx\_t}$ point FFT is used for all MT specific operations in Fig. 7.

Because in downlink all OVSF codes for all MTs are sent from the same source, namely the AP, their orthogonality is always maintained with respect to timing synchronization. Furthermore, in downlink it is much easier for individual MTs to do clock/frequency synchronization under the support of a dedicated superframe described below. This leads to smaller ICI caused by frequency/clock offset. If Doubler shift is also small due to limited mobility of MTs, the scrambling code for downlink only needs to be AP and bandwidth class specific. All connections of all MTs of the same bandwidth class, which are associated with the same AP, may share the same scrambling code without much performance loss. The reason to make scrambling codes AP specific is for better protection from the interferences from other APs.

All MT specific operations up to the connection adders 83s, 83t in Fig. 7, i.e. the channel encoder & interleavers 70si, 70sj, 70ti, 70tj (generally called downlink symbol generation means), the sub-carrier mappers 71si, 71sj, 71ti, 71tj and the OVSF spreaders & scramblers 82si, 82sj, 82ti, 82tj, have the same descriptions as those for the uplink transmitter in Fig. 1. After all connections of MT_t are added, a vector $E7_{MT\_t}(i)$ containing $N_{d\_rx\_t}$ spectral coefficients is generated for each MT_t of bandwidth class t. An optional pre-equalization and/or low-pass filtering for power shaping can be applied to $E7_{MT}(i)$ by exploiting the uplink channel estimate results. Before all $E7_{MT\_t}(i)$'s with bandwidth-specific sizes can be added together for the concurrent $N_{d\_tx}$ point IFFT, their indices need to re-ordered, in general, to meet the frequency correspondence in the enlarged FFT window. Therefore, the mapping process as shown in Fig. 6 has to be performed by the index shifters 73s, 73t, but in a reverse direction. After this mapping process, an $N_{d\_tx}$ dimensional FFT vector is generated for each MT_t, which only contains the first $N_{d\_rx\_t}/2$ and the last $N_{d\_rx\_t}/2$ non-zero spectral coefficients. The FFT coefficients sitting in-between are set to zero.

If more than one MT is from the same bandwidth class, the input vectors $E7_{MT\_t}(i)$ of the MTs of the same bandwidth class can be added first before the start of the FFT coefficient re-ordering process in the index shifters 73s, 73t.

After the index shifters 73s, 73t, the enlarged FFT vectors for different MTs can be added by a second adder 84, and the sum undergoes a concurrent IFFT with a single IFFT unit 74 of the maximum size $N_{d\_tx}$. After this $N_{d\_tx}$ point IFFT, the conventional operations for OFDM symbols of $N_{d\_tx}$ points follow using a GP inserter 75, a LPF 76 and a DAC 77. Because the synchronization problem in downlink is less severe than in uplink, the guard period for downlink can be smaller than that for uplink.

Because the optional, bandwidth class specific waveform-shaping operation is carried out in the digital domain (on the sum of the $E7_{MT\_t}(i)$ vectors of the MTs of the same bandwidth class), the RF front-end 78 only needs a single analogue waveform-shaping filter, which is dimensioned for the maximum bandwidth that is supported by the system.

The channel encoder and interleavers 70, the sub-carrier mappers 71 and the OVSF spreaders and scramblers 82, are generally also called downlink OFDM coding means, and the downlink OFDM coding means, the adders 83, the index shifters 73 and the IFFT unit 74 are generally also called downlink OFDM modulation means.

Similar to Fig. 1, to illustrate the signal flows in the scheme of Fig. 7, the output data sequence at the channel encoder and interleaver 70ti shall be assumed to be A(1), A(2), A(3), A(4), A(5), ..., where A(k)=(a_1(k), a_2(k), ...a_mi (k))$^T$ is a vector with mi complex components. The real and the imaginary parts of each component a_1(k) represent the I- and Q-components of the channel encoded data symbol, respectively. The sequence A(k) is preferably stored in an output FIFO queue of the channel encoder and interleaver 70ti, and will be read out by the sub-carrier mapper 71 ti on demand.

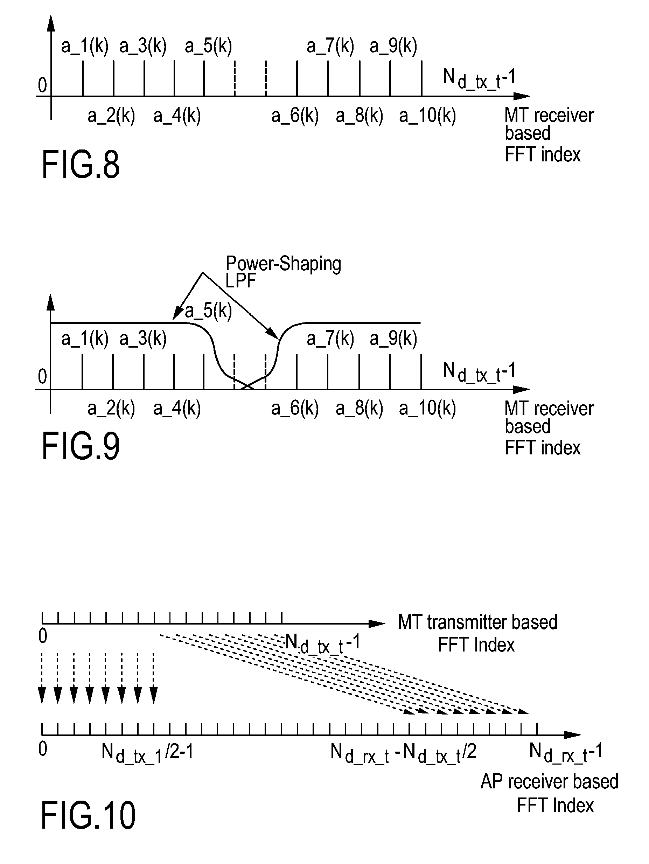

For each output vector A7(k) of the channel encoder and interleaver 70ti, the sub-carrier mapper 71ti maps its mi components $a_{7\_p}(k)$, p=1,..., mi, onto mi out of $N_{d\_rx}$ sub-carriers of the considered MT receiver to obtain B7(k). The DC sub-carrier and some highest-frequent sub-carriers with positive and negative sign may not be used. A possible mapping in sub-carrier mapper 71ti for mi=10 is illustrated in Fig. 8.

After OVSF spreading and scrambling each so constructed output data symbol is a frequency domain OFDM symbol C7(k) with respect to the FFT index that is based on the MT receiver under consideration. Because the spectrum of this bandwidth class specific OFDM symbol may be extended during the actual transmission, a preventive power-shaping LPF can be applied to gradually reduce the power at the edge of the OFDM symbol spectrum. A possible power-shaping LPF function is shown in Fig. 9.

After the power-shaping LPF and the adders 83t, 83s, the index shifters 73t, 73s re-maps the MT receiver based FFT indices $E7_{MT}$ onto the AP transmitter based FFT indices, whose FFT size $N_{d\_tx}$ is $2^k$ times larger than the FFT size $N_{d\_rx\_t}$ of the MT receiver. The re-mapping is done by assigning the first $N_{d\_rx\_t}/2$ sub-carriers of the MT receiver based FFT window to the first $N_{d\_rx\_t}/2$ indices of the AP transmitter based FFT window, and by assigning the last $N_{d\_rx\_t}/2$ sub-carriers of the MT receiver based FFT window to the last $N_{d\_rx\_t}/2$ indices of the AP transmitter based FFT window. This operation is illustrated in Fig. 10. Finally, an adder 84 adds the results of the index shifters 83t, 83s to obtain $F7_{AP}$.

General layout for downlink receiver

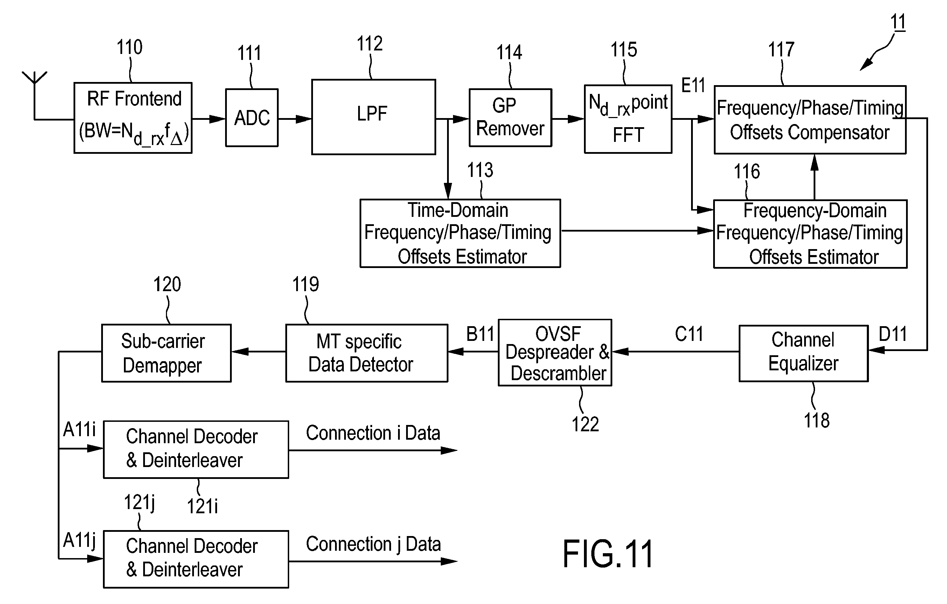

Fig. 11 shows a block diagram of a receiver architecture for downlink, i.e. the schematic layout of the downlink receiving unit 11 of a user terminal of a specific bandwidth class according to the present invention for use in the asymmetric OFDM communication system.

A conventional RF front-end 110 and a conventional ADC 111, and a conventional digital low-pass filter 112, which are dimensioned for the terminal-specific bandwidth of $N_{d\_rx} f_\Delta$ receive the mixed RF OFDM signals from the access point, convert the signals to digital format and filter out the out-of-band unwanted signals. The digital signal after the digital LPF 112 only contains the channel encoded symbols of the smallest bandwidth up to the bandwidth $N_{d\_rx} f_\Delta$, which is the bandwidth of the considered terminal. The AP may or may not send common preambles for all MTs, or MT-specific preambles that could be code-, frequency, or time-multiplexed with the preambles for the other MTs. If a preamble is sent to the terminal under consideration, a time-domain frequency/phase/timing offsets estimator 113 performs the frequency, phase, and timing acquisition and tracking based on a special bit pattern in the preamble. After the time-domain frequency/phase/timing offsets estimator 113 the guard period is removed in a GP remover 114, and the remaining $N_{d\_rx}$ samples undergo a conventional $N_{d\_rx}$ point FFT in an FFT unit 115. The output vector E11 (the frequency domain OFDM signal) of the $N_{d\_rx}$ point FFT unit 115 contains the sub-carriers up to the bandwidth of the considered terminal, on which the connections of other MTs may be OVSF code multiplexed.

If the access point sends common or terminal-specific pilot tones, a frequency-domain frequency/phase/timing offsets estimator 116 can execute another frequency/phase/timing offsets estimation in the frequency domain. The pilot tones for different MTs can be frequency, code- or time-multiplexed. The AP may send preambles and/or pilot tones, or neither, depending on the performance requirement. A preamble may be constructed such that it also carries pilot tones for channel estimation and additional frequency/phase/timing tracking in the frequency domain. The frequency-domain frequency/phase/timing offsets estimator 116 also utilizes the results from the time-domain frequency/phase/timing offsets estimator 113 to increase the precision and confidence of the estimation. A frequency/phase/timing offsets compensator 117 exploits the final frequency/phase/timing estimation results for the considered terminal to compensate for the offsets on the modulated sub-carriers in the frequency domain OFDM signal E11.

Thereafter, channel equalization is executed on the output vector D11 of the frequency/phase/timing offsets compensator 117 in a channel equalizer 118, because its result is more reliable on D11, rather than on E11, after the frequency/phase/timing offsets are cleaned up. The channel equalizer 118 delivers its output vector C11, which contains all possible sub-carriers of the terminal. The OVSF despreader & descrambler 122 demultiplexes the different user connections by a combined despreading and descrambling operation per sub-carrier with the corresponding OVSF and scrambling codes. For a user connection with spreading factor p, the OVSF despreader & descrambler 122 must multiply the values on each of the used sub-carriers from p consecutive C11 with the corresponding chips of the OVSF code and the chips of the scrambling code. The output vector B11 of OVSF despreader & descrambler 122 contains not only the indices of all sub-carriers of the MT, but also the despreading and descrambling results for all possible connections on each sub-carrier. Because the latter are still affected by noise and interferences, in general, a MT-specific data detector 119 (e.g. MLSE) can be applied to statistically optimize the demodulation result for each connection on a used sub-carrier. The statistically optimized detection results are delivered to the sub-carrier demapper, which reconstructs the m_i data symbols as the components of A11i for each connection i of the MT.

Here, as above, despreading along sub-carriers has been explained. But it shall be noted that despreading can also be applied across sub-carriers instead. Both methods, in particular the differences, will be explained in more detail below.

Finally, the channel encoded symbols A11i, A11j are de-interleaved and channel-decoded in a channel decoder and deinterleaver 121 to obtain the original upper layer data.

The OVSF despreader & descrambler 122, the sub-carrier demapper 120 and the channel decoder and deinterleavers 121 i, 121j are generally also called downlink OFDM decoding means, and the FFT unit 115 and the OFDM decoding means are generally also called downlink OFDM demodulation means.

The MT receiver is a conventional OFDM receiver. After the ADC 111, which may be clocked at a rate higher than BW=$N_{d\_rx} f_\Delta$, a digital low-pass filtering 112 is executed. If the ADC 111 is over-sampling, the digital LPF 112 is also followed by a down-sampling to the required bandwidth $N_{d\_rx} f_\Delta$.

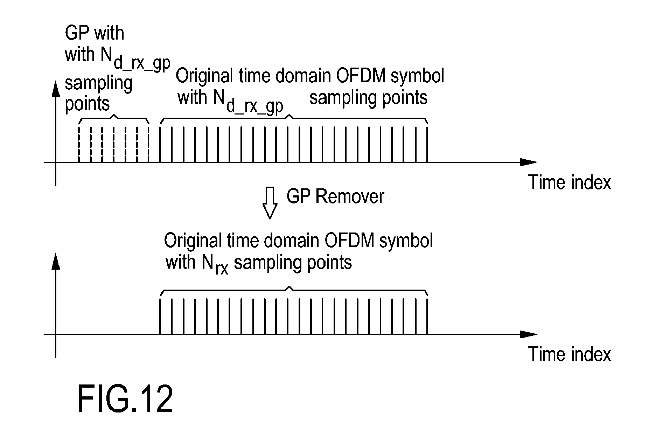

The GP remover 54 removes the $N_{d\_rx\_gp}$ preceding samples from each time domain OFDM symbol with guard period, as is illustrated in Fig. 12.

The $N_{d\_rx}$-point FFT transformer 115 transforms the time domain OFDM symbol without guard period to an OFDM symbol in the frequency domain. After frequency/phase/timing offset compensation, channel equalization and data detection, the sub-carrier demapper 120 maps the m reconstructed used sub-carriers of each frequency domain OFDM symbol B11(k) to mi and mj channel encoded data symbols a_1(k), a_2(k), ... a_m(k) and a_1(k), a_2(k), ... a_mj(k) for further processing by the channel decoder and deinterleavers 121i, 121j.

In the following, additional background information and further embodiments of the general communication system according to the present invention as described in detail above shall be explained.

Orthogonal variable spreading factor codes

Different spreading factor means different code length. The idea is to be able to combine different messages with different spreading factors and keep the orthogonality between them. Therefore, codes of different length are needed that are still orthogonal. Of course, the chip rate remains the same for all codes so short ones will be transmitted at a higher information rate than longer ones.

The OVSF code generator unit generates an OVSF code from a set of orthogonal codes. OVSF codes were first introduced for 3G communication systems. OVSF codes are primarily used to preserve orthogonality between different channels in a communication system.

OVSF codes are defined as the rows of an N-by-N matrix, $C_N$, which is defined recursively as follows. First, define $C_1 = [1]$. Next, assume that $C_N$ is defined and let $C_N(k)$ denote the kth row of $C_N$. Define $C_{2N}$ by

$$C_{2N} = \begin{bmatrix} C_N(0) & C_N(0) \\ C_N(0) & -C_N(0) \\ C_N(1) & C_N(1) \\ C_N(1) & -C_N(1) \\ ... & ... \\ C_N(N-1) & C_N(N-1) \\ C_N(N-1) & -C_N(N-1) \end{bmatrix}$$

Note that $C_N$ is only defined for N a power of 2. It follows by induction that the rows of $C_N$ are orthogonal.

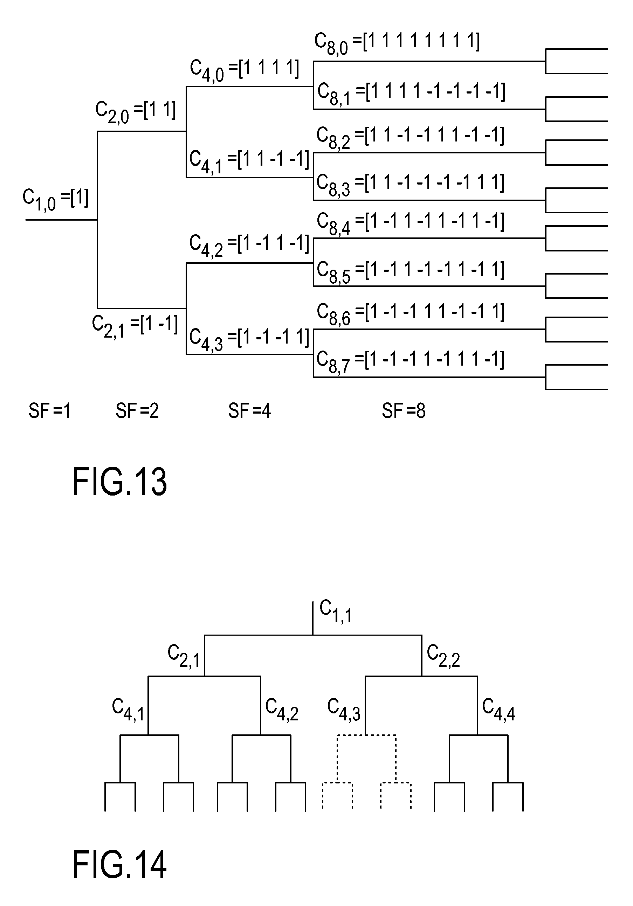

The OVSF codes can also be defined recursively by a tree structure, as shown in Fig. 13. If [C] is a code length $2^r$ at depth r in the tree, where the root has depth 0, the two branches leading out of C are labeled by the sequences [C C] and [C -C], which have length $2^{r+1}$. The codes at depth r in the tree are the rows of the matrix $C_N$, where $N = 2^r$.

The code the OVSF Code Generator block outputs by two parameters in the block's dialog is specified as follows: the spreading factor, which is the length of the code, and the code index, which must be an integer in the range [0,1, ... , N - 1], where N is the spreading factor. If the code appears at depth r in the preceding tree, the spreading factor is $2^r$. The code index specifies how far down the column of the tree at depth r the code appears, counting from 0 to N - 1. For $C_{N, k}$ in Fig. 13, N is the spreading factor and k is the code index.

The code can be recovered from the spreading factor and the code index as follows. Convert the code index to the corresponding binary number, and then add 0s to the left, if necessary, so that the resulting binary sequence $x_1 x_2 ... x_r$ has length r, where r is the logarithm base 2 of the spreading factor. This sequence describes the path from the root to the code. The path takes the upper branch from the code at depth i if $x_i = 0$, and the lower branch if $x_i = 1$.

To reconstruct the code, recursively define a sequence of codes $C_i$ for as follows. Let $C_0$ be the root [1]. Assuming that $C_i$ has been defined, for i < r, define $C_{i+1}$ by

$$C_{i+1} = \begin{cases} C_i C_i & \text{if } x_i = 0 \\ C_i(-C_i) & \text{if } x_i = 1 \end{cases}$$

The code $C_N$ has the specified spreading factor and code index.

For example, to find the code with spreading factor 16 and code index 6, the following should be done:

Convert 6 to the binary number 110.

Add one 0 to the left to obtain 0110, which has length $4 = \log_2 16$.

Construct the sequences $C_i$ according to the following table.

| i | $x_i$ | $C_i$ |
|---|---|---|
| 0 | | $C_0 = [1]$ |
| 1 | 0 | $C_1 = C_0 C_0 = [1][1]$ |
| 2 | 1 | $C_2 = C_1 - C_1 = [1\ 1][-1\ -1]$ |
| 3 | 1 | $C_3 = C_2 - C_2 = [1\ 1\ -1\ -1]\ [-1\ -1\ 1\ 1]$ |
| 4 | 0 | $C_4 = C_3 C_3 = [1\ 1\ -1\ -1\ -1\ -1\ 1\ 1][1\ 1\ -1\ -1\ -1\ -1\ 1\ 1]$ |

The code $C_4$ has spreading factor 16 and code index 6.

Codes on different levels of the tree have different lengths. Since during spreading, each information bit is multiplied by an entire codeword, it means that longer codes are associated with lower bit rates. Codewords represent a particular combination of zeros and ones chosen among a code. Hence, a code is defined here as a set of codewords.

When two messages with different codewords and spreading factors are transmitted at the same time, the shorter codeword, modulated by its information message, will get repeated a number of times for each transmission of one longer codeword.

For example, the short codeword shall be denoted as S and the long codeword as L. Then it holds:

Short code sequence: [ S][-S][ S][-S][...

Long code sequence: [ L ][...

represents how a short and a long code are transmitted at the same time. Note that the short code is modulated in this example by the message sequence (1, -1, 1, -1).

As can be seen, new levels in the code tree are constructed by concatenating a root codeword with a replica or an inverse of itself. It means that in the previous example, L could have being constructed with S as root. If that was the case, then the two codewords would not be orthogonal. The reason is that for some information messages, the short codeword would be modulated exactly as the long codeword is built and hence there would be no way of discriminating between the two signals. The following example illustrates this:

If L was constructed from S, then L could be for instance: [L] = [S] [S] [-S] [-S]

Then, if two signals are transmitted, one having as channelization code L and the other S, and it is supposed that at a certain instant in time, the message signal carried by the short codeword is (1, 1, -1, -1) and the information carried by the long codeword L is (1), the following situation could be encountered:

Short codeword transmission: ... [S][S][-S][-S]...
Long codeword transmission: ... [ L ] ...
And using the definition of L given above results in:
Short codeword transmission: ... [ S][S][-S][-S] ...
Long codeword transmission: ... [S][S][-S][-S] ...

There is no way possible to discriminate the two signals as they are identical. Since the information signal could take any values, it is very likely that this situation would happen.

Referring to the tree structure, it means that if a codeword is assigned to a certain user, then all the codewords below that assigned codeword cannot be used, as they are not orthogonal to it. Fig. 14 illustrates this. Here the code $C_{4,3}$ is selected so that codewords from the entire sub-tree below $C_{4,3}$ cannot be assigned.

Next the difference between spreading along and across sub-carriers shall be explained.

Spreading along each sub-carrier

As an example, in the following it will be described how OVSF spreading along sub-carriers and scrambling is done for both uplink and downlink for a bandwidth class, which consists of 8 sub-carriers.

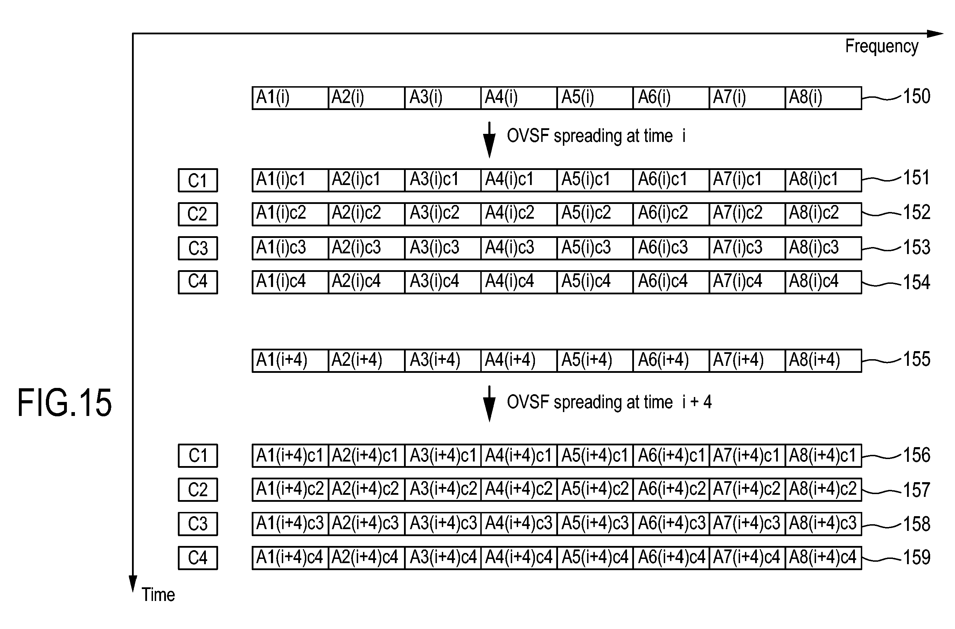

OVSF spreading along sub-carriers for one connection (connection A) is illustrated in Fig. 15. At time point i an unspread original frequency domain OFDM block of a given connection will be taken by the OVSF spreading means. The 8 sub-carriers A1(i) - A8(i) of this un-spread frequency domain OFDM block 150 will be multiplied with the sampling point values C1 - C4 of the OVSF spreading code to generate 4 different spread frequency domain OFDM blocks 151, 152, 153, 154 for the time points i, i+1, i+2, i+3. The OVSF code is unique for each connection. This spreading process is repeated for this connection at time point i+4 for a new un-spread original frequency domain OFDM block 155 to obtain the spread frequency domain OFDM blocks 156, 157, 158, 159. In general, the repetition period is K, where K is the length of the OVSF spreading code for the connection under consideration.

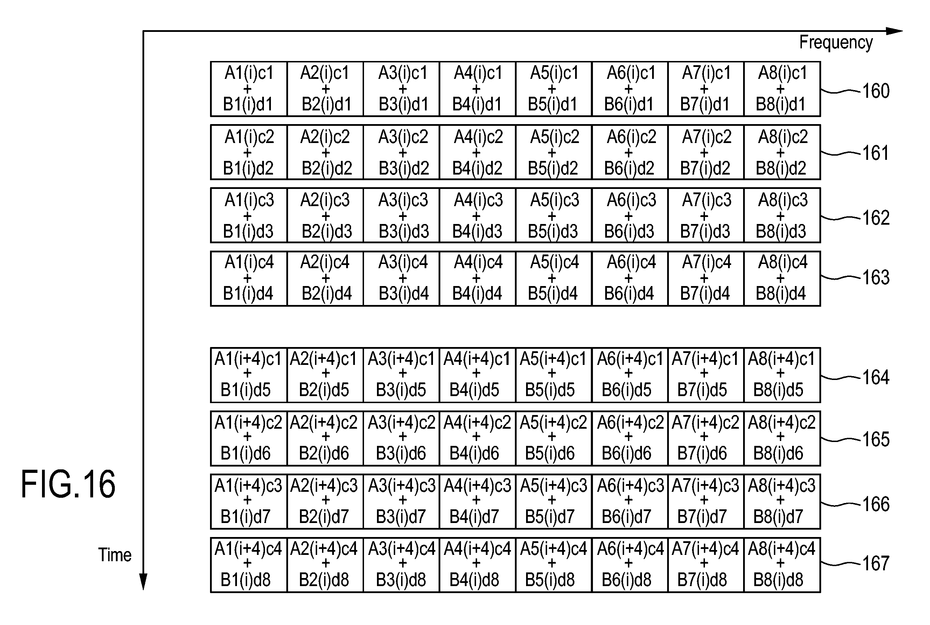

Multi-Rate connections multiplexing with OVSF spreading (connections A+B) is illustrated in Fig. 16. This figure shows the multiplex of two connections A and B by connection specific OVSF spreading along each sub-carrier with different code lengths. Both connections are mapped onto the same 8 sub-carriers A1 - A8, B1 - B8 of the OFDM blocks. In general, partial overlapping in frequency is allowed. The OVSF spreading code C=(c1,c2,c3,c4) for connection A has a length of 4, and the OVSF spreading code D=(d1,d2,d3,d4,d5,d6,d7,d8) for connection B has a length of 8. Therefore, the bit rate of connection A is twice as large as that of connection B. After connection specific spreading the amplitudes of the spread sub-carriers of each connection are added together to obtain the connection multiplexed OFDM blocks 160 -167.

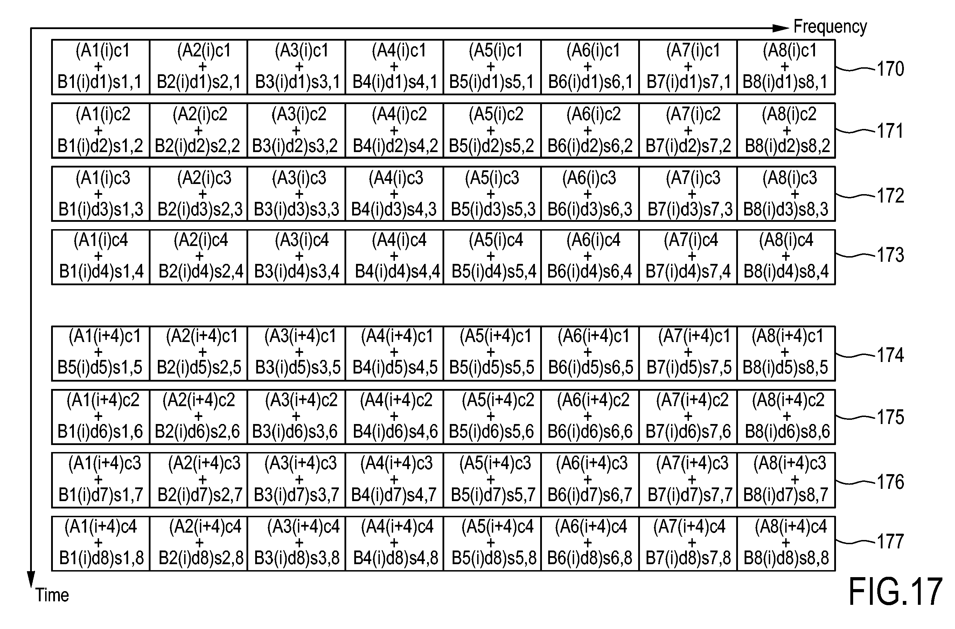

Scrambling after multi-rate connection multiplex is illustrated in Fig. 17. The scrambling means multiplies each sub-carrier of the connections multiplexed frequency domain OFDM blocks 160 -167 at the different time points with the sampling point values of a sub-carrier index specific scrambling code. The length of the scrambling code can be much larger than that of any OVSF spreading code. Fig. 17 shows that the i-th scrambling code Si=(si,1, si,2, si,3, si,4, si,5, si,6, si,7, si,8) is used to scramble the i-th sub-carrier of the connection multiplexed frequency domain OFDM blocks 160-167 along the time axis to obtain scrambled connections multiplexed frequency domain OFDM blocks 170-177.

Spreading across sub-carriers

As an example, in the following it will be described how OVSF spreading across sub-carriers and the subsequent scrambling is done for both uplink and downlink for a bandwidth class, which consists of 8 sub-carriers.

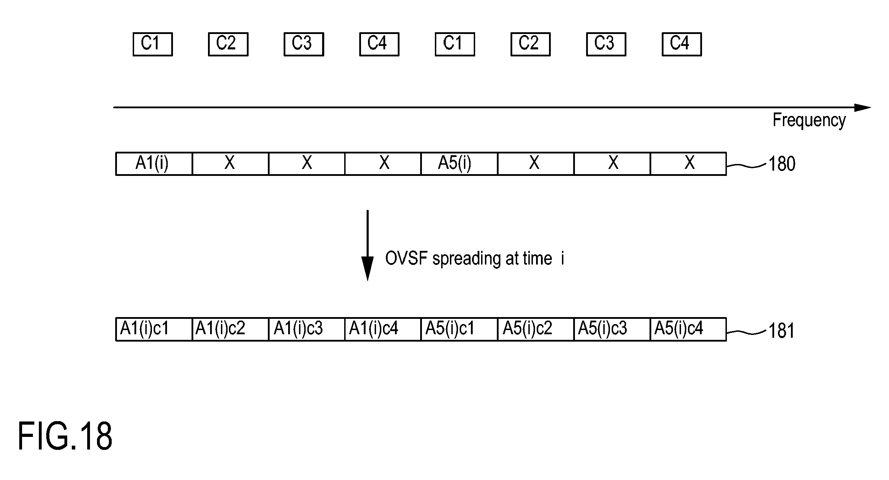

OVSF spreading across sub-carriers for one connection (connection A) is illustrated in Fig. 18. OVSF spreading across sub-carriers generates K sub-carriers with increasing frequency indices from one sub-carrier in the original un-spread OFDM block 180, where K is the OVSF code length. For example, Fig. 18 shows that the un-spread OFDM block 180 at time i only contains two original sub-carriers A1(i) and A5(i) at frequency indices 1 and 5. The other sub-carriers of the un-spread OFDM blocks are zero. After OVSF spreading of length K=4, 4 different sub-carriers are generated for each original sub-carrier by repeating the original sub-carrier at 3 (K-1=3) subsequent frequency indices and multiplying the 4 sub-carriers with the sampling point values C1 to C4 of the OVSF code for this connection, i.e. the spread frequency domain OFDM block 181 is obtained.

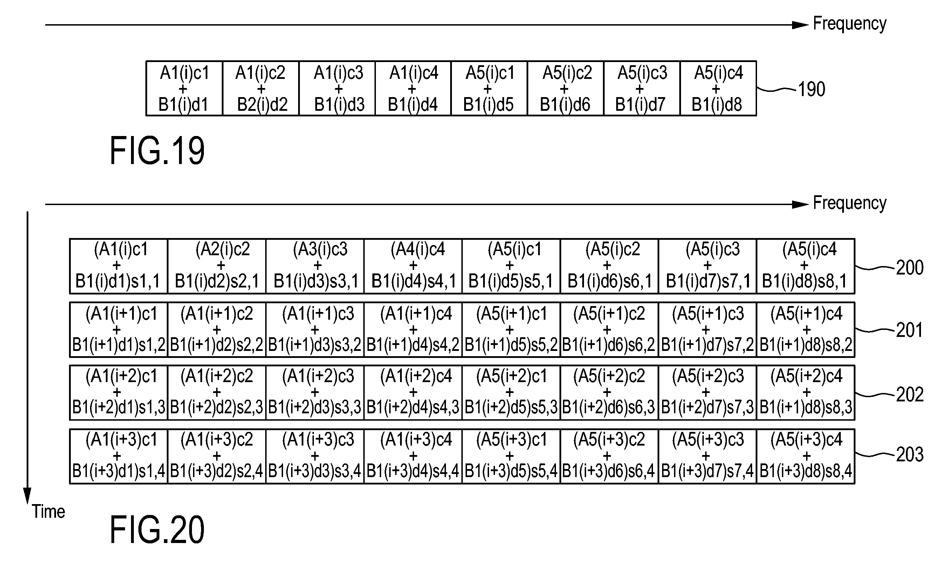

Multi-Rate connections multiplexing with OVSF spreading (connections A+B) is illustrated in Fig. 19. This figure shows the multiplex of two connections A and B by connection specific OVSF spreading across sub-carriers with different code lengths. The un-spread OFDM block 180 for connection A contains two original sub-carriers at frequency indices 1 and 5, while the un-spread OFDM block for connection B contains only one original sub-carrier at frequency index 1. After OVSF spreading with the different code lengths the result 190 shown in Fig. 19 is obtained.

Scrambling after multi-rate connection multiplex is illustrated in Fig. 20. The scrambling means multiplies each sub-carrier of the connections multiplexed frequency domain OFDM blocks 190 at the different time points with the sampling point values of a sub-carrier index specific scrambling code. The scrambling code can be of any length. Fig. 20 shows that the i-th scrambling code Si=(si,1, si,2, si,3, si,4) is used to scramble the i-th sub-carrier of the connection multiplexed frequency domain OFDM blocks 190 along the time axis to obtain scrambled connections multiplexed frequency domain OFDM blocks 200 -203.

Advantageous mapping between spreading factors and OVSF codes in case spreading across sub-carriers.

The OVSF principle has been explained above. Let $C_{p,q} = \{b_0, b_1, ..., b_{p-1}\}$ denote the q-th OVSF code of length p. If the OVSF codes were used conventionally for the different bandwidth classes in the proposed downlink transmitter design, $C_{p,q}$ would be used to spread a data symbol over p sub-carriers, independently of the bandwidth class the MT belongs to. This would mean that MTs of smaller bandwidths could only use shorter OVSF codes. Because the shorter a used OVSF code is, the less remaining non-blocking OVSF codes are left in the code tree for other connections, a limited number of low bandwidth connections would easily consume all non-blocking short OVSF codes, and make them no longer available for MTs of large bandwidths. As a consequence, only low bit rate connections could be further set up for the MTs of large bandwidths with longer OVSF codes. This means that the conventional mapping between OVSF codes and spreading factors cannot be applied in the proposed bandwidth asymmetric OFDM system design properly, because the connections belonging to low bandwidth classes would block the resources in the high bandwidth classes to be available to new connection requests.

Therefore, an advantageous mapping between the OVSF codes and spreading factors is proposed for the bandwidth asymmetric OFDM system design. The mapping is defined in a successive way. It starts with the highest bandwidth class. Suppose the highest bandwidth class contains $N=2^n$ available sub-carriers in total. Then, the whole OVSF code tree, which starts with the root code $C_{1,0}$ of length 1, and ends with codes $C_{N,i}$ of the maximum length N, is available for this bandwidth class. A code $C_{p,q} = \{b_0, b_1, ..., b_{p-1}\}$ of length p from this OVSF code tree is used for spreading over p sub-carriers (spreading factor p) for the highest bandwidth class. For the next highest bandwidth class, which contains N/2 available sub-carriers in total, a code $C_{p,q} = \{b_0, b_1, ..., b_{p-1}\}$ of length p from this OVSF code tree is used for spreading over p/2 sub-carriers, if $p \geq 2$. This is made possible by demanding that only the first p/2 chips $b_c$ of $C_{p, q}$, $b_c = 0, ...p/2-1$, are used for spreading, the remaining chips of $C_{p, q}$ are not used in the spreading process. For the second highest bandwidth class, the root code $C_{1,0}$ is out of consideration for spreading factor of 1.

Now, for a general bandwidth class with $2^{n-k}$ sub-carriers in total, $0 \leq k \leq n$, a code $C_{p, q} = \{b_0, b_1, ..., b_{p-1}\}$ of length p is required from this OVSF code tree to be used for spreading over $p/2^k$ sub-carriers, if $p \geq 2^k$. This is made possible by demanding that only the first $p/2^k$ chips $b_c$ of $C_{p, q}$, $b_c = 0, ...p/2^k - 1$, are used for spreading, the remaining chips are not used in the spreading process. For this general bandwidth class with $2^{n-k}$ sub-carriers, the codes of lengths between 1 and $2^{k-1}$ from this OVSF code tree are out of consideration for spreading factors between 1 and $2^{k-1}$, and the codes of length $2^k$ from this OVSF code tree are used as spreading factor 1.

Preamble design

First, an embodiment using preambles in the downlink transmission from the AP to a MT belonging to a specific bandwidth class, and/or in the uplink transmission from a MT belonging to a specific bandwidth class to the AP shall be explained.

It is well know that OFDM systems require preambles to enable frequency/clock, phase, and timing synchronization between the transmitter and receiver, which is very crucial for goodperformance. The processing of preambles takes place in the time-domain frequency/phase/timing offsets estimator and/or in the frequency-domain frequency/phase/timing offsets estimator of uplink and downlink receiver. There are many different methods to exploit preambles for various types of synchronization.

Because the AP has to support MTs of different bandwidths in the above described bandwidth asymmetric OFDM system according to the present invention, a straightforward application of the conventional preamble design paradigm may lead to independent generation and processing of preambles for different bandwidth classes. This would mean an increased amount of system control data, which are overhead, and more baseband processing. In the following a harmonized preamble design approach will be explained by which these disadvantages can be avoided.

The AP in the proposed bandwidth asymmetric OFDM system supports MTs of different bandwidths. Let the k-th bandwidth class of MTs be defined as the class of MTs, whose FFT/IFFT has only $2^k$ coefficients, and whose FFT/IFFT sampling rate is $2^k f_\Delta$, where $f_\Delta$ is sub-carrier spacing, which is set equal for both the AP and MT. Without loss of generality, the FFT/IFFT sampling rate of the AP is equal to that of the MTs belonging to the highest bandwidth class.

After the Parseval's Theorem

$$\int_{-\infty}^{\infty} s_1(t)s_2(t)dt = \int_{-\infty}^{\infty} S_1(f)S_2^*(f)df$$

an OFDM preamble with good autocorrelation property in the frequency domain will also have good autocorrelation property in the time domain. This is the reason why the preambles for the IEEE802.11a system are based on short and long synchronization sequences with good autocorrelation property in the frequency domain, although the synchronization operation itself is done in the time-domain in most practical implementations.

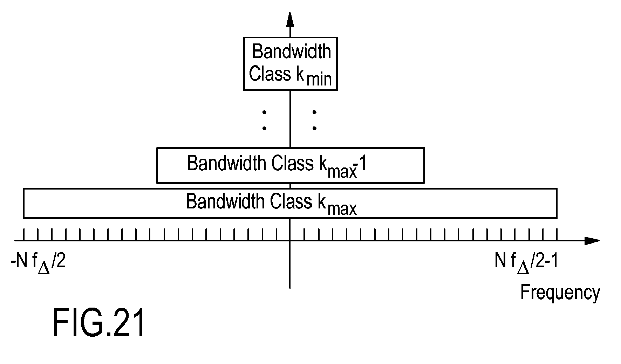

Let the size of the FFT unit in the AP be $N = 2^{kmax}$. These N spectral coefficients represent physically a (periodic) spectrum from $-N f_\Delta/2$ to $N f_\Delta/2 - 1$. The MTs of the different bandwidth classes use differently the FFT coefficients over this entire spectrum. Fig. 21 illustrates how the different bandwidth classes share the different spectral coefficients. The lower frequent the spectral coefficients are, the more bandwidth classes are using them.

Because MTs of different bandwidths are sharing sub-carriers within their overlapping spectrum, there is now a possibility to design a single M-point long preamble sequence Pr(i) to be shared by the MTs of different bandwidths, where $M \leq N$. In general, the following requirement shall be met by this common preamble sequence:

Each of the M chips of Pr(i), $i = 0,..M-1$, shall be assigned to one unique sub-carrier. The M chips shall be distributed such that if the k-th bandwidth class with $2^k$ sub-carriers contain p chips of Pr(i), the k+1-th bandwidth class with $2^{k+1}$ sub-carriers shall contain 2p chips of Pr(i).

For the minimum bandwidth class to be considered, which contains $N_{min} = 2^{kmin}$ lowest-frequent FFT coefficients, the chips of Pr(i) falling in the bandwidth of the minimum bandwidth class shall have good auto-correlation property. This implies that there are enough chips, say >4, falling into the minimum bandwidth class.

For two bandwidth classes $k_1$ and $k_2$, which contain $2^{k1}$ and $2^{k2}$ FFT coefficients, respectively, and $k_1 > k_2 > k_{min}$, the autocorrelation property of the chips of Pr(i), which fall into the $k_1$-th bandwidth class shall be equal or better than the autocorrelation property of the chips, which fall into the $k_2$-th bandwidth class. This is because the $k_1$-th bandwidth class contains more chips of Pr(i) than the $k_2$-th bandwidth class.

The chips of any two different preambles $Pr_1(i)$ and $Pr_2(i)$, which fall into the same bandwidth class shall be orthogonal to each other.

Following this design requirement, and assuming that the lowest bandwidth class will contain enough FFT coefficients, say $N_{min}=16$, it is proposed to use the orthogonal Gold codes as common preambles for the bandwidth asymmetric OFDM system. Such orthogonal Gold codes are, for instance, described in the book "OFDM and MC-CDMA for Broadband Multi-User Communications, WLANs and Broadcasting" by L. Hanzo, M. Muenster, B.J. Choi, T. Keller, John Wiley & Sons, June 2004. This is because the Gold codes have good autocorrelation and cross-correlation properties for any given length, as compared to other codes. However, the following design technique can also be applied to any other codes, such as m-sequence, etc.

Each Gold code of length $M=2^m$ shall represent a unique M-point common preamble, where $M \leq N$, in general. Let the number of the different bandwidth classes be $Q=2^q$, $q<m$, and $k_{min}$ be the index for the minimum bandwidth class. Starting with the minimum bandwidth class the following successive design rule applies.

The minimum bandwidth class shall contain the first $M_{kmin}=M/Q$ chips of the Gold code. These $M_{kmin}$ chips may or may not be equidistantly assigned to the $N_{min}=2^{kmin}$ sub-carriers of the minimum bandwidth class. This can be determined by the individual system design.

Suppose $M_k$ chips are assigned to the k-th bandwidth class, the k+1-th bandwidth class shall contain the first $2M_k$ chips of the Gold code. The first half of these $2M_k$ chips is the same as the chips for the k-th bandwidth class. That means the k-th bandwidth class decides their assignment to sub-carriers. The second half of these $2M_k$ chips are assigned to the sub-carriers which fall into the frequency of the k+1-th bandwidth class, but do not fall into the frequency of the k-th bandwidth class. Again, the positions of the sub-carriers the $2^{nd}$ half of these $2M_k$ chips are assigned to are free to choose.

At the receiver in a MT of the k-th bandwidth class, the received time domain OFDM symbols (i.e. before the bandwidth class specific FFT) are only made of the first $2^k$ lowest frequent sub-carriers that are sent by the AP, because the RF front-end of the MT will filter out all other sub-carriers. Therefore, for the detection of the preamble, the MT only needs to correlate, in the time domain, the receiver OFDM symbols with the IFFT transformed version of the Gold code section, whose $M_k$ chips are assigned to $M_k$ freely chosen sub-carriers within the k-th bandwidth.

If on these $M_k$ chosen sub-carriers no other data are multiplexed, the MT can immediately use these $M_k$ sub-carriers (i.e. after the bandwidth specific FFT) as pilot tones to estimate the transfer function between the AP and the MT, because these sub-carriers are just modulated with the know sample values at the first $M_k$ chips of the Gold code.

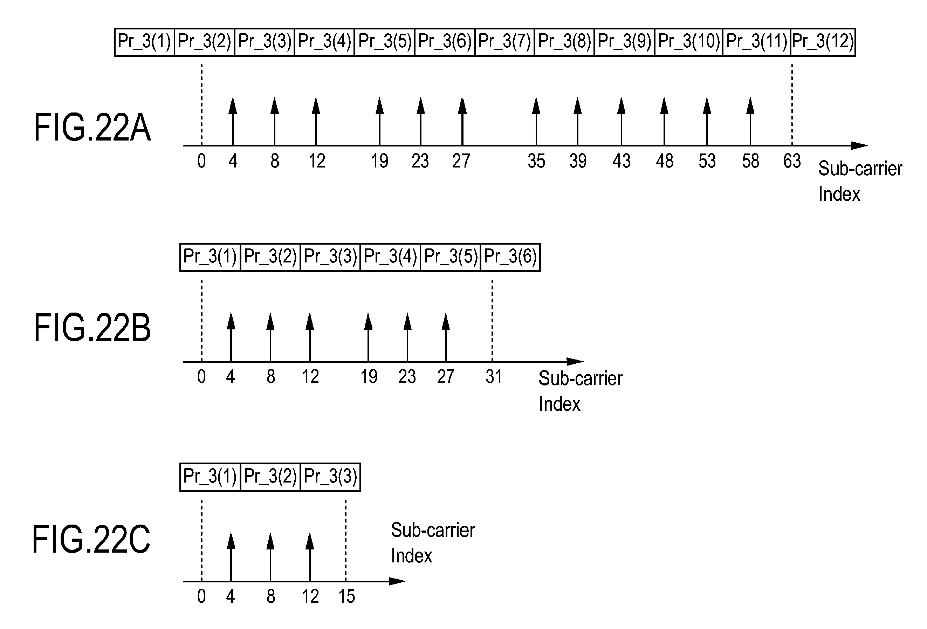

As an example, 3 different bandwidth classes are assumed. The largest bandwidth class has 64 FFT coefficients, the second largest one 32 FFT coefficients, and the smallest bandwidth class has 16 FFT coefficients. That means $k_{max}=6$, $k_{min}=4$. The Gold sequence for the largest bandwidth class has 12 samples Pr_6(i), i=1,..,12. Fig. 22 shows how starting from this Gold sequence for the largest bandwidth class and its assignment to 12 selected sub-carriers 4, 8, 12, 19, 23, 27, 35, 39, 43, 48, 53, 58. The preamble sequences for other bandwidth classes and their assignment to sub-carriers are determined according the above design rules. Fig. 22A shows the preamble Pr_6(i) for the largest bandwidth class and a possible assignment to 12 sub-carriers, Fig. 22B shows the preamble Pr_5(i) for the second largest bandwidth class and the derived assignment to 6 sub-carriers, Fig. 22C shows the preamble Pr_4(i) for the smallest bandwidth class and the derived assignment to 3 sub-carriers.

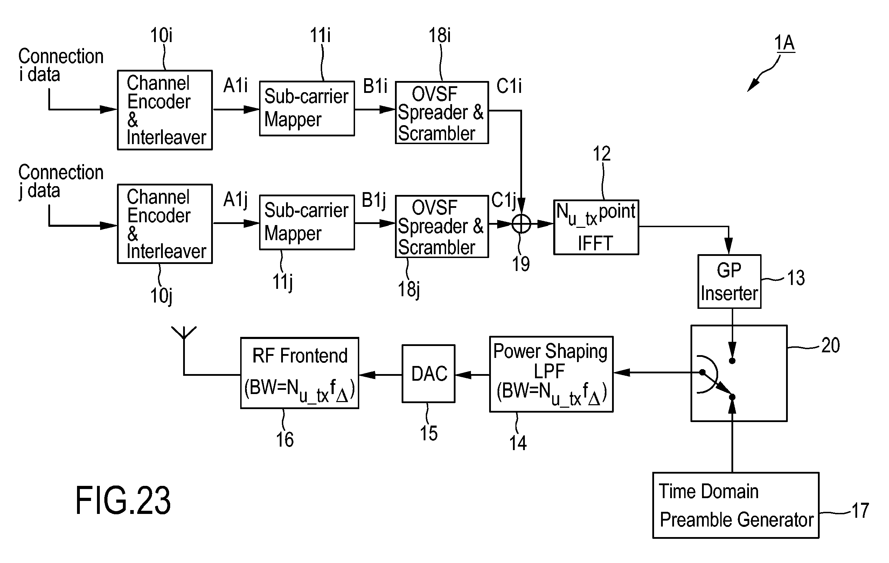

Fig. 23 shows a layout of the uplink transmitter 1A with means for preamble insertion, which is based on the layout shown in Fig. 1. The switch 20 determines if a preamble sequence or an OFDM user data block will be transmitted in uplink by the MT. The time domain preamble generator 17 may generate the preamble directly in the time domain, or first generate a temporary preamble in the frequency domain according to a design rule, and then transform this temporary preamble to the final time domain preamble through a $N_{u\_tx}$ point IFFT. The time domain preamble is preferably stored in a memory (not shown). When the switch 20 is in the upper position, the time domain preamble is read out at the right clock rate, and the transmission of the OFDM user data block is suspended.

At the uplink receiver (as generally shown in Fig. 4), the preamble sequence will be exploited by the time-domain frequency/phase/timing offsets estimator 43 and/or frequency-domain frequency/phase/timing offsets estimators 47s, 47t. If only the time-domain frequency/phase/timing offsets estimator 43 will exploit the preamble sequence, only the RF front-end 40, ADC 41, digital LPF 42 and time-domain frequency/phase/timing offsets estimator 43 of the uplink receiver 4 shown in Fig. 4 will process the preamble sequence. If also the frequency-domain frequency/phase/timing offsets estimators 47s, 47t will exploit the preamble sequence, the common $N_{u\_rx}$ point FFT unit 45, windowing & mixing units 46s, 46t, and frequency-domain frequency/phase/timing offsets estimator 47s, 47t of the uplink receiver 4 will process the preamble sequence, too. The GP remover 44 may be disabled, depending on the actual design of the preamble.

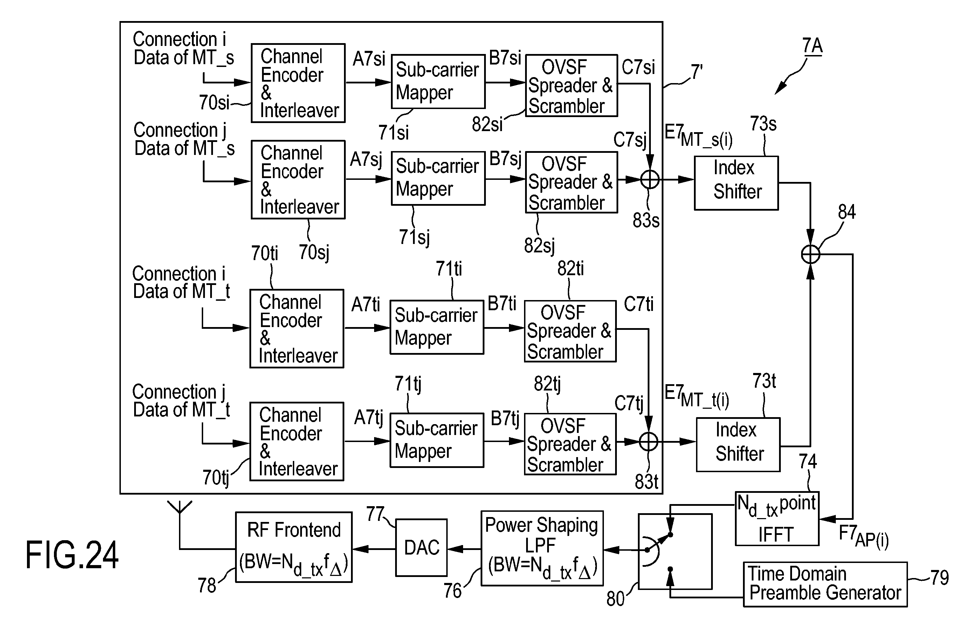

Fig. 24 shows a layout of the downlink transmitter 7A with means for preamble insertion which is based on the layout shown in Fig. 7. The switch 80 determines if the AP will transmit a preamble sequence or an OFDM user data block in downlink. The time domain preamble generator 79 may generate the preamble directly in the time domain, or first generate a temporary preamble in the frequency domain according to a design rule for the conventional FFT index numbering system of the bandwidth class under consideration. Then, the temporary preamble needs to be index-shifted to the FFT index numbering system of the common FFT unit, and finally transformed to the time domain preamble through the common $N_{d\_tx}$ point IFFT for all bandwidth classes. The time domain preamble is preferably stored in a memory. When the switch is in the lower position, the time domain preamble is read out at the right clock rate, and the transmission of the OFDM user data block is suspended.

At the downlink receiver (as generally shown in Fig. 11), the preamble sequence will be exploited by the time-domain frequency/phase/timing offsets estimator 113 and/or frequency-domain frequency/phase/timing offsets estimator 116. If only the time-domain frequency/phase/timing offsets estimator 113 will exploit the preamble sequence, only the RF front-end 110, ADC 111, digital LPF 112 and time-domain frequency/phase/timing offsets estimator 113 in the downlink receiver 11 shown in Fig. 11 will process the preamble sequence. If also the frequency-domain frequency/ phase/timing offsets estimator 116 will exploit the preamble sequence, the $N_{d\_rx}$ point FFT unit 115, and frequency-domain frequency/phase/timing offsets estimator 116 will process the preamble sequence, too. The GP remover 114 may be disabled, depending on the actual design of the preamble.

The above proposal to send or receive preambles by the AP regularly or on demand to/from the different MTs supplements the communication system proposed according to the present invention. It makes the cost, size, and power consumption of the MT scalable, hence covers a much larger area of potential applications than any single known wireless system.

Coexistence between known and new communication systems

Next, an embodiment will be described explaining the coexistence between known OFDM communication systems and the OFDM communication system according to the present invention, even in the same frequency band.

Starting with the basic requirement of maximum hardware component sharing and possible concurrent communications with MTs of both the new and legacy OFDM systems, it is important for this requirement that the sub-carrier spacing $f_\Delta$ of the new OFDM system is set to that of the legacy OFDM system. For IEEE802.11 a/n the sub-carrier spacing is 20MHz/64=312.5 kHz. The uplink guard period of the new OFDM system is assumed to be the same or larger than that of the legacy OFDM system, and the downlink guard period is assumed to be the same for both systems.

To inform the MTs of the new OFDM system of the activity of a legacy OFDM system, the AP sends a continuous cosine waveform at a frequency at $f_\Delta/4$, if the AP is in the legacy system mode, even if the AP is concurrently also in the new system mode. That means the continuous cosine waveform is only absent, if the AP is only in the new system mode. The frequency of the cosine waveform is chosen closely to the DC sub-carrier of the channel encoded symbols, because the DC sub-carrier is neither used by the legacy OFDM system, nor by the new OFDM system. The MTs of the new OFDM system detect the cosine waveform at the given frequency to be notified of the existence of a legacy OFDM system. Frequency, or phase, or amplitude modulation on the cosine waveform is possible to convey very low speed signaling messages from the AP to all MTs of the new bandwidth asymmetric OFDM system. These messages could contain, for example, the parameters of the legacy system.

Alternating-mode embodiment for coexistence

According to an alternating-mode embodiment for coexistence with legacy OFDM systems the AP alternates its operation between the new system mode and the legacy system mode, once it has detected a user activity in the legacy system mode. For the purpose of detecting legacy system's users, the AP may temporarily suspend all transmissions in the new system by sending the continuous cosine waveform, thus making the shared spectrum free for carrier sensing by a legacy system's user station, so that it will start the association process with the AP in the legacy system mode. If within a time period no association request is received, the AP terminates the sending of the continuous cosine waveform, thus switching back to the normal mode for the new system.

If at least one legacy system's user is associated with the AP, the AP shall alternate its operation between two modes by switching on and off the continuous cosine waveform. The duration in each mode will be decided on the traffic load in each system, or another priority policy. The minimum duration in the legacy system mode is reached after no activity in the legacy system has been detected for a given period of time.

Below it will be discussed how the transmitter and receiver components of the new bandwidth asymmetric OFDM system can be reused for the legacy OFDM system in the AP. The discussion is based on the uplink receiver architecture described above and shown in Fig. 4 and the downlink transmitter architecture described above and shown in Fig. 7.

Referring to the uplink receiver architecture as shown in Fig. 4, there is no need to add a new RF front-end for the AP to support the legacy system 802.11 a/n. If the uplink guard period is different for the different systems, the GP remover 44 in Fig. 4 shall remove the right guard period samples for the actual system mode. Because the bandwidth of the legacy system coincides with the bandwidth of one of supported bandwidth classes, the common $N_{u\_rx}$ point FFT 45 and the windowing & mixing units 46s, 46t can be reused for the legacy system.

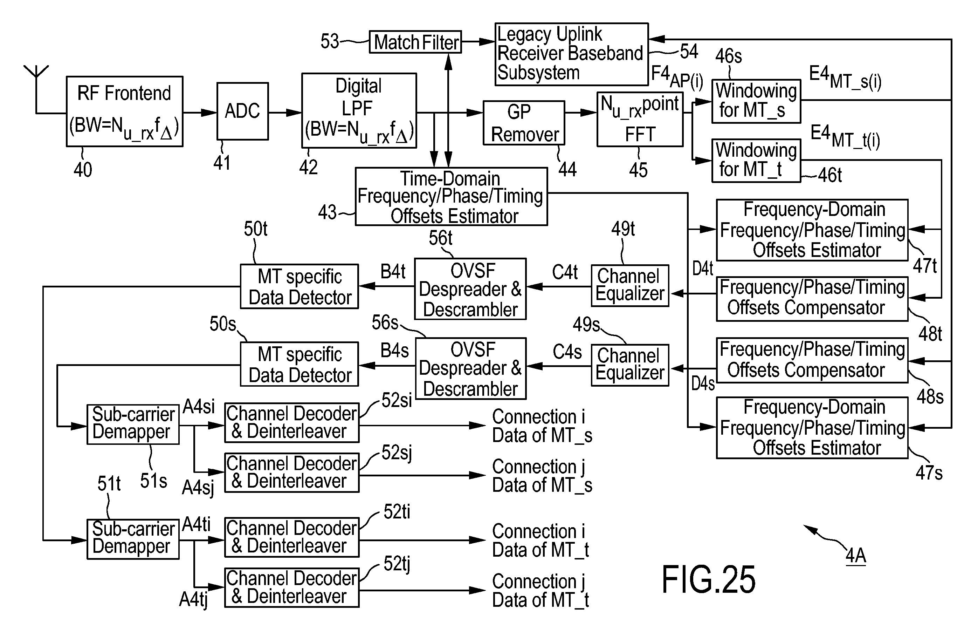

The windowing & mixing will deliver $N_L$ FFT coefficients of the legacy OFDM system, on which a dedicated baseband processing for the legacy system can follow. That means the units following the windowing & mixing units 36s, 46t in Fig. 4 cannot be reused without modification. A modified layout - based on the layout of Fig. 4 - of the uplink receiver 4B is thus provided as shown in Fig. 25. Because the time-domain frequency/phase/timing offsets estimator 43 is designed for the new OFDM system, a dedicated match filter 53 is added in the time domain for the legacy OFDM system, which is matched to the short and long preambles of the legacy OFDM system, to do frequency and timing acquisition. Further, a legacy uplink receiver baseband sub-system 54 is provided which follows the FFT in the conventional design.

It is to be noted that the blocks 53 and 54 are only active if the AP is in legacy system mode, that the blocks 43, 47 to 52 are only active if the AP is in new system mode, and that the remaining blocks 40 to 42 and 44 to 46 are common blocks in either mode.

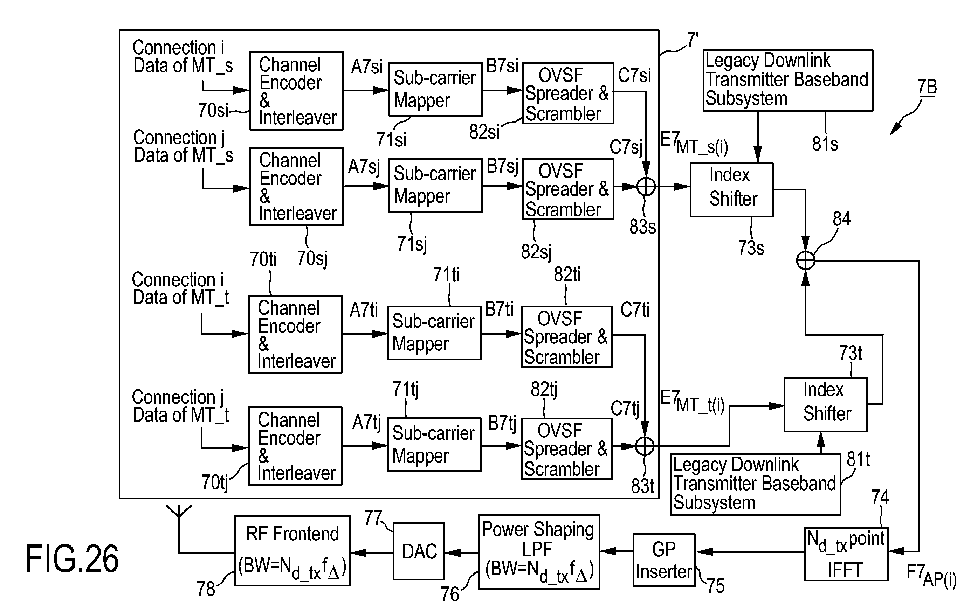

Referring to the downlink transmitter architecture as shown in Fig. 7, the legacy OFDM system requires dedicated baseband functional blocks up to the power shaping LPF 72 in the frequency domain. That means the reusability starts with the power shaping LPF 72. A modified layout - based on the layout of Fig. 7 - of the downlink transmitter 7B is thus provided as shown in Fig. 26. The dedicated functional blocks of the legacy downlink transmitter baseband subsystem 81 will generate an $E7_{MT\_u}(i)$ vector, which contains the $N_L$ FFT coefficients of the legacy system. For IEEE802.11a, $N_L$=64. An optional digital waveform shaping operation can be executed on $E7_{MT\_u}(i)$ by the means of power shaping LPF 72 to better match the channel characteristic. Because the bandwidth of the legacy system coincides with the bandwidth of one of supported bandwidth classes, the index shifter for that bandwidth class can be reused to shift the $N_L$ spectral coefficients of the legacy system to the right positions within the $N_{d\_tx}$ point window of the common IFFT unit 74. After the IFFT unit 74, the GP inserter 75 will insert the common guard period, independently of the system mode. The DAC 77 and the RF front-end 78 in Fig. 7 can then be completely reused for the legacy system.

It is to be noted that the block 81 is only active if the AP is in legacy system mode, that the blocks 70 to 72 are only active if the AP is in new system mode, and that the remaining blocks 73 to 78 are common blocks in either mode. Further, the representative vector $E7_{MT}$ in Fig. 26, which is generated for the new system, must not contain sub-carriers within the frequency band of the legacy subsystem 81, to ensure the frequency division of the two systems.

Concurrent-mode embodiment for coexistence

The above explained alternating-mode embodiment for coexistence has the disadvantage that in the legacy system mode only a part of the entire bandwidth for the new system is used. The following concurrent-mode embodiment for coexistence overcomes this disadvantage by allowing all MTs of the new OFDM system to communicate with the AP over those sub-carriers within their bandwidth class that lie outside the frequency band of the legacy system, if at least one legacy system's user is associated with the AP. That means that as long as the continuous cosine waveform is transmitted, all MTs of the new system and the AP refrain from using the sub-carriers within the frequency band occupied by the legacy system. This also applies to preambles and pilot tones used in the new system.

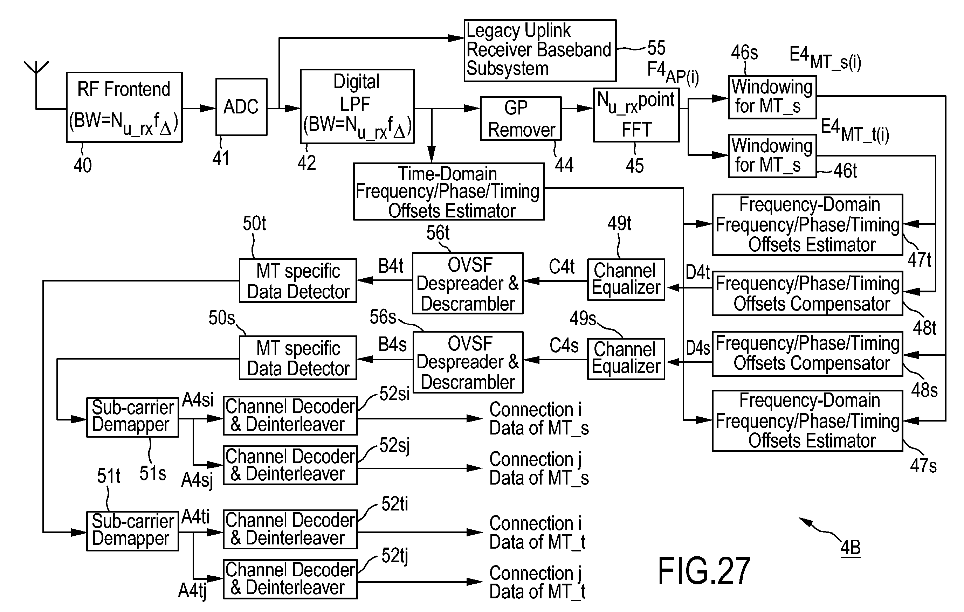

Because the channel encoded symbols of the legacy system arrive at the AP independently of the OFDM symbol timing of the new system, a concurrent FFT for channel encoded symbols from both the new system and the legacy system in the uplink receiver is difficult. Therefore, only the RF front-end 40 of the architecture shown in Fig. 4 should be used concurrently by the two systems, which is possible due to frequency division (i.e. no shared sub-carriers) for the two systems. A modified layout - based on the layout of Fig. 4 - of the uplink receiver 4C is thus provided as shown in Fig. 27. After the common ADC block 41, an additional independent baseband branch is used including a uplink receiver baseband subsystem 55 for all remaining necessary baseband functions for the legacy system, which may run at a different hardware clock as the hardware clock for the baseband branch for the new OFDM system.

The windowing & mixing units 46s, 46t following the FFT unit 45 for the new system shall only deliver re-ordered sub-carriers outside the frequency band of the legacy system. The digital LPF filter (not shown) in the independent baseband subsystem 55 for the legacy system, which usually immediately follows the ADC 41, shall take care that only the relevant bandwidth of the legacy system is filtered out.

It is to be noted that in concurrent mode all blocks shown in Fig. 27 are generally active. Further, it is to be noted that the downlink transmitter in the AP for concurrent mode has the same architecture as the downlink transmitter architecture in the AP for alternating mode as shown in Fig. 26. The only difference is that in the concurrent mode all blocks are generally active, which means that blocks 70 to 72 and 81 are active at the same time.

The above proposal to enable coexistence between known OFDM systems and the new OFDM system supplements the communication system proposed according to the present invention. It makes the cost, size, and power consumption of the MT scalable, hence covers a much larger area of potential applications than any single known wireless system. In particular, the following new functions are enabled:

a) The AP can tell the MT of the new bandwidth asymmetric OFDM system that a legacy OFDM system has become active, and that all the spectrum resources needed by the legacy OFDM system are blocked for being used by the new bandwidth asymmetric OFDM system.

b) The AP can either switch between the two system modes, or communicate with the MTs of the two different OFDM systems in parallel.

Furthermore, it has been shown that there is possibility to reuse all the RF components and part of the baseband unit (e.g. software modules) of the new OFDM system for the legacy OFDM system.

Frame structure

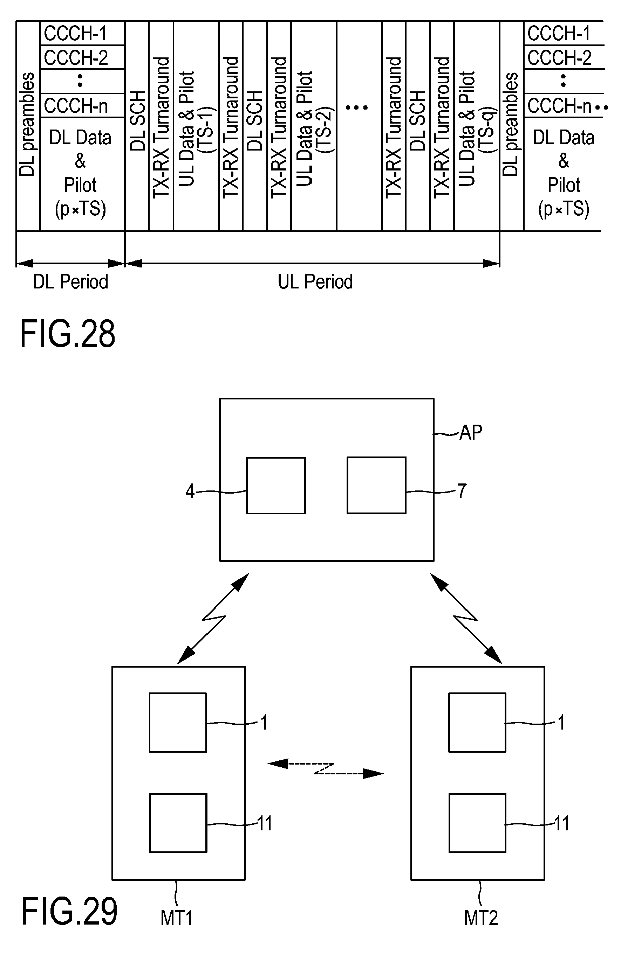

For the proposed bandwidth asymmetric OFDM system a superframe structure as shown in Fig. 28 is preferably used. The superframe starts with a downlink (DL) period, which is followed by an uplink (UL) period.

The DL period starts with DL preambles, which is followed by p downlink time slots (TS) for data and pilot tones. Each TS is of fixed length, which can be set between 0.5ms-2ms, for example. The UL period consists of q uplink TS for data and pilot tones. Each UL TS is preceded by a DL synchronization sequence (DL SCH), and a TX-RX turnaround time before and after it, which is needed to switch the RF front-end from receiver mode to transmitter mode in the MT, and from transmitter mode to receiver mode in the AP. For the first UL TS the TX-RX turnaround only appears after the DL SCH. The TX-RX turnaround time is typically less than $2\mu s$. The DL SCH is used for the MTs to do frequency/clock, phase, and timing adjustment for the following TS. After the MT receiver has re-synchronized to the DL SCH, the transmitter in the MT shall be locked to the frequency and phase of the MT receiver after the operation has been switched from the receiver mode to the transmitter mode in the MT. This can be done via an internal PLL, which is locked to the frequency and phase of the DL SCH sequence and keeps running based on the last frequency/phase information obtained from the DL SCH in the transmitter mode (i.e. in the absence of DL SCH). The DL SCH sequence can be made identically to the whole or a sub-set of the DL preambles. It should contain a sufficient large number of sub-carriers in each bandwidth class for offering good auto-correlation property for each bandwidth class.

The DL preambles are made of $N_s$ identical short preambles and $N_1$ identical long preambles. Each short and long preamble shall contain a sufficiently large number of sub-carriers within the frequency band of each bandwidth class. A short preamble is a time-domain shortened version of a root preamble P1, and a long preamble is a time domain extended version of a root preamble P2. A possible design for the root preambles P1 and P2 for the new bandwidth asymmetric OFDM system has been described above. Beyond frequency/clock, phase and timing synchronization, the long preambles are also used for DL channel estimation. The AP may have different groups of DL preambles. Each group of DL preambles is associated with the specific OVSF and scramble codes as well as the sub-carriers, which are used by the following Common Control Channels, CCCH-i, for the different bandwidth classes i. After a MT has matched to a group of DL preambles, it is able to decode the following CCCH-i for its bandwidth class i.

The AP sends system parameters to the MTs of the i-th bandwidth class via CCCH-i. The sub-carriers of CCCH-i shall sit all within the frequency band of the i-th bandwidth class. CCCH-i is multiplexed with other connections by OVSF spreading plus scrambling along the used sub-carriers, or by OVSF spreading across the sub-carriers plus scrambling of the considered bandwidth class. In CCCH-i of each DL period, the AP shall send the following information elements to the MTs in the order as given below:

1. The duration of the current DL period, and that of the following UL period. In case that the duration of the DL period and that of the UL period are fixed, this information element can be omitted.
2. The identifiers (ID) of the MTs of the considered bandwidth class, which are expected to receive data in the current DL period, and/or to transmit data in the following UL period. If a MT does not see its ID in this information element, it can put itself into sleeping mode for the duration of the current superframe.
3. The updated DL connection parameters for each active MT, which take effect N OFDM symbols after this information element is received.

The AP shall only send the updated connection parameter to a MT, if compared to the last superframe its connection status has changed. The reason for such a change can be

i) A new connection has been set up. In this case all parameters (e.g. OVSF and scrambling codes, channel coding and modulation mode) related to the new connection shall be conveyed in this information element.
ii) An existing connection has been released.
iii) The parameters (e.g. OVSF and scrambling codes, used channel coding and modulation) of an on-going connection have to be changed. In this case the new parameters of this on-going connections shall be conveyed in this information element.

Furthermore, the AP may send out the parameters of the UL random access channel (RACH-i) in CCCH-i, either regularly, or irregularly. A UL RACH-i differs from a normal UL user data channel (DCH) in the sense that its OVSF codes and possible transmission time slots are shared by all MTs of the same bandwidth class i. The AP can signal that there are m possible sets of OVSF and scrambling codes and n possible time slots for a MT of bandwidth class i to access RACH-i. Until this information is updated, a MT of the bandwidth class i need just to pick one of the signaled OVSF and scrambling code sets and time slots to send data over RACH-i to the AP. This is similar to the W-CDMA system.

Before the UL period, the AP shall also send the following information elements to the active MTs via the different bandwidth class specific common control channels, CCCH-i:

1. The updated UL transmission power. This information element is only sent, if the AP wants to change the transmission power of the last UL period.

2. The updated UL connection parameters for each active MT. This information element is only sent to the considered MT, if a connection update is triggered for one of the same reasons as in the case of DL.

3. The information about the frequency, phase and the start time deviation of the received uplink OFDM symbols from the common references in the AP. This information element is only sent, if the deviation has exceeded a threshold.

In the proposed superframe design there are no UL preambles, because the MTs of all bandwidth classes can/shall use the DL SCH to do uplink frequency, phase and OFDM start time synchronization with the common references, firstly. The remaining deviation from the common references at the AP can be adjusted through the feedback from the AP via the bandwidth class specific common control channels CCCH-i.

If there is a need to update the uplink transmission power and/or to feed back the deviation from the UL frequency, phase and timing references more frequently, a very short CCCH-i period (e.g. 1-2 OFDM symbol long) can be inserted between DL SCH and TX-RX turnaround before each UL TS_j in Fig. 28. If the capacity of this short CCCH-i is not large enough to convey all updates and deviations, the most critical updates and deviations are first sent.

The MTs of each bandwidth class i can use RACH-i to send control/signaling data to the AP.

It is also possible to set up a dedicated DL and/or UL control channel (DCCH) between the AP and a MT. A DCCH is set up and released in the same way as a DCH, which is used for user data. Both DCCH and DCH use a unique combination of OVSF and scrambling codes, which are signaled via CCCH-i from the AP to the MT after the connection is set up. Downlink and uplink DCCH and DCH are sent in the DL Data & Pilot TS, and UL Data & Pilot TS, respectively.

Procedures

For the proposed bandwidth asymmetric OFDM systems to operate as designed new procedures have been developed for the different stages of the operation.

Network identification and synchronization

For the two CDMA based system concepts a multi-network environment can also be created over the same frequency band, because the scrambling in both uplink and downlink will make the interferences from neighboring APs behave like noises. The MT does the following procedure for network identification and synchronization. It measures the reception quality for each of the possible groups of DL preambles, and then selects the one with the best reception quality and synchronizes to it. Because there is a one-to-one correspondence between the DL preambles group ID and the used scrambling code(s) for different common control channels CCCH-i, the MT can start to decode the contents in CCCH-i after being synchronized to the best DL preambles group. Each DL preambles group is also associated with the set of scrambling codes for the possible sub-carriers to be used by the MT, since the scrambling codes should be MT and sub-carrier specific in uplink, and AP and bandwidth class specific in downlink.

Network association and dissociation

From CCCH-i the MT will learn all the necessary system parameters to start the association with the network. One important parameter is the access parameters of the random access channel (RACH-i). The RACH-i channel is determined by randomly choosing one OVSF code out of a group of possible OVSF codes reserved for RACH-i, and one starting time slot out of a set of possible uplink time slots. There is a one-to-one correspondence between each OVSF code for RACH-i and the used sub-carriers for RACH-i. After the MT has acquired the RACH channel, it can send a network association request to the AP over RACH-i.

After the network association request is received via RACH-i, the AP can establish a dedicated control channel for both uplink and downlink for the MT. The dedicated control channel is established by informing the MT of the OVSF code of the connection. If the MT wants to dissociate with the network, it just sends a dissociation request to the AP via either RACH-i or the existing dedicated uplink control channel. The AP can initiate dissociation for the MT.

Connection set up and release

If a MT initiates a connection set up, it shall send the request either via RACH-i or the existing dedicated uplink control channel. Upon reception of the connection setup request, the AP will either inform the MT of the OVSF code for the new connection or reject the request due to overload of the system. If the AP initiate a connection set up, it shall send notify the MT of the request either via the common DL broadcast channel (i.e. CCCH-i), or via the dedicated downlink control channel between the AP and the MT. The MT may accept or reject the request.
Either the MT or AP can initiate a connection release via the same control channel as that for the set up request. The consequence of that is that all resources for that connection are freed afterwards.

Peer-to-peer operation

The following discussion is based on the superframe structure shown in Fig. 28. The design objective is that the hardware of the new OFDM systems needs not to be changed for peer-to-peer communications. That means the peer-to-peer communication shall be enabled only by software extension. This will be explained in the following.
The peer-to-peer (p2p) communication is a special service of the system. If a MT wants to make use of it, it needs to register with the AP for the service. The MT uses the network association procedure described above to associate with the AP, and then uses either RACH-i or a dedicated control channel to register for the p2p service. For that, the MT sends its p2p service registration request together with its device ID and the p2p group ID to the AP. The AP checks if the MT belongs to the p2p group, and if there is enough resources available for this p2p group. If yes, the AP informs the MT of the following parameters for the registered p2p service:

1. A preamble for the p2p data channel.
2. A preamble for the p2p ACK channel, which can be the same as that for the p2p data channel.
3. A spreading code for the p2pdata channel.
4. A spreading code for the p2p ACK channel, which can be the same as that for the p2p data channel.
5. A scrambling code for the p2p data channel.
6. A scrambling code for the p2p ACK channel, which can be the same as that for the p2p data channel.
7. The used sub-carriers for the p2p data channel.
8. The used sub-carriers for the p2p ACK channel, which can be same as that for the p2p data channel.
9. The p2p service expiration time, and optionally the service tariff rate.

After p2p service registration the MT is ready to use the p2p service. If it wants to use the p2p service, it needs to put its receiver in listening mode to check if any data are received on the data channel, which is characterized by the assigned preambles, spreading codes, scrambling codes, and sub-carriers for the p2p data channel. If a p2p service packet is received on the data channel, the MT shall check if the packet contains its p2p group ID and its own MT ID as destination ID. If not, it shall ignore the packet. If yes, it shall process the packet, and returns an ACK via the ACK channel, which is characterized by the assigned preambles, spreading codes, scrambling codes, and sub-carriers for the p2p ACK channel.
The MT switches to the transmit mode, if it has its own data to send. In this case, the MT uses the conventional or a modified CSMA protocol to sense the channel, and to acquire the p2p data channel. It then sends its p2p user data on the channel. After the p2p user data are sent, it switches to the receive mode again, and listens to the ACK channel. If within a timeout limit, the ACK for its user data packet is received, the user data is transmitted successfully. Otherwise, it needs to repeat the transmission in a Aloha manner. The MT shall also de-register the p2p service with AP, if it no longer needs the p2p service, or prolong the p2p service explicitly, if the p2p service expiration time has reached. Otherwise, AP will force a de-registration.
Fig. 29 shows a simple block diagram of a communications system in which the present invention can be used. Fig. 29 shows particularly an access point AP having an uplink receiving unit 4 and a downlink transmission unit 7 and two terminals MT1, MT2 comprising an uplink transmission unit 1 and a downlink receiving unit 11. Such a communications system could, for instance, be a telecommunications system, in which the access point AP represents one of a plurality of base stations and in which the terminals MT1, MT2 represent mobile stations or other mobile devices. However, the communications system could also of any other type and/or for any other purpose.

Summary

With this new system design, in principle, the requirement that the OFDM symbols from different MTs have to arrive at the AP in synchronization has been removed. This is enabled by the combination of OVSF spreading with scrambling with a MT-specific scrambling code along each sub-carrier. Considering one single OFDM sub-carrier, the uplink spreading and scrambling operation in frequency domain in the new system is equivalent to the uplink spreading and scrambling operation in time domain in the W-CDMA system. Therefore, the uplink timing synchronization requirement for OFDM is reduced to that of W-CDMA, which allows time-asynchronous uplink transmission, in principle. Like W-CDMA, OVSF codes for channelization within a MT are used, but it is now applied to the used sub-carriers for each MT bandwidth class. Different MTs may use the same OVSF code for spreading, because it is followed by a long scrambling code acting as a mark to differ different MTs. Unlike W-CDMA, the scrambling code is not only unique for each MT, but also unique for each sub-carrier. Further, by using MT and sub-carrier specific scrambling codes ICI can be better prevented, which may be caused by clock and/or frequency offset, and Doubler-shift as well. If support for ICI estimate is not needed, one single MT specific scrambling code can be used for all sub-carriers.

As mentioned above, uplink synchronization of OFDM symbols from different MTs at the AP is made no longer an intrinsic requirement by the new system design. However, if the OFDM symbols from different MTs are too much out of sync, a concurrent FFT is not possible, which would increase the receiver complexity significantly. Therefore, a dedicated superframe structure is optionally proposed to support the AP to estimate the frequency/clock and timing offsets for different MTs and to feed back these estimates to the MTs, letting them adjust the frequency/clock and timing. In doing so, a quasi-synchronization of the OFDM arrival times for different MTs is obtained. The remaining small offsets and jitters are tolerable and can be further reduced by offset compensation techniques, which are also supported by the new receiver architecture.

According to the present invention three methods can be applied to reduce the uplink synchronization requirement:

1) OVSF plus spreading along sub-carriers;
2) Uplink sync offset feedback from AP to MT via the bandwidth adaptive downlink common/control channel as shown in the superframe structure (CCCH-i);
3) Re-synchronization to a common downlink signal (DL SCH) by each MT, just before it starts uplink transmission as shown by a special downlink interval in the superframe structure.

All three methods can be applied independent from each other, but the result can be achieved if all three methods are applied in combination.

In summary, the major technical challenges arising from the new design of the communication system according to the present invention are as follows.

MTs of different bandwidths can communicate with the AP at different times (e.g. TDMA, FDMA, CSMA based) or the same time (e.g. CDMA based)

MT of a given bandwidth class can still have multiple connections of different bit rates (multi-rate within each terminal class)

Uplink synchronization between the channel encoded symbols from MTs of different bandwidths

Low complexity implementation of the AP by a common OFDM modulation and demodulation architecture with a single FFT/IFFT engine for all MTs of different bandwidths

Low complexity implementation of RF front-end by using a common RF channel selection filter in the AP for all MTs of different bandwidths

Effective support for channel equalization

Effective support for interference mitigation

Effective support for pre-distortion or pre-equalization

Robustness to inter-carrier-interference (ICI), inter-symbol-interference (ISI), and Doppler-shift

Reduced sensitivity to timing, frequency, phase and clock offsets

Efficient MAC

Spectrum co-existence with legacy wireless systems.

It should be noted that the invention is not limited to any of the above described embodiments, such as a telecommunications network including mobile phones and base stations or a IEEE802.11a system. The invention is generally applicable in any existing or future communication systems and in terminals and access points of such communication systems for transmitting any kind of content. The invention is also not limited to any particular frequency ranges or modulation technologies.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measured cannot be used to advantage.

Any reference signs in the claims should not be construed as limiting the scope.

## Claims

1. Communication system comprising a plurality of terminals each having an uplink transmission unit (1) for transmitting radio frequency OFDM signals at a radio frequency and an access point having an uplink receiving unit (4) for concurrently receiving said radio frequency OFDM signals from at least two terminals, said OFDM signals being Orthogonal Frequency Division Multiplex (OFDM) modulated, **characterized in that** the bandwidth of said uplink transmission units and of the transmitted radio frequency OFDM signals is smaller than the bandwidth of said uplink receiving unit and that the bandwidth of at least two uplink transmission units and of their transmitted radio frequency OFDM signals is different.

2. Communication system, in particular according to claim 1, wherein the access point has a downlink transmission unit (7) for transmitting radio frequency OFDM signals at a radio frequency and that the at least two terminals each have a downlink receiving unit (11) for receiving said radio frequency OFDM signals, wherein the downlink transmitting unit of said access unit is adapted for concurrently transmitting said radio frequency OFDM signals to said at least two downlink receiving units and wherein said downlink receiving units are adapted for receiving radio frequency OFDM signal concurrently sent from said downlink transmission unit, **characterized in that** the bandwidth of said downlink transmission unit is larger than the bandwidth of said downlink receiving units and that the downlink transmission unit is adapted to generate and transmit radio frequency OFDM signals having a bandwidth that is smaller than or equal to the bandwidth of the downlink transmission unit and that is equal to the bandwidth of the downlink receiving unit by which the radio frequency OFDM signals shall be received.

3. Communication system according to claims 1 and 2, **characterized in that** the uplink transmission unit (1) and the downlink transmission unit (7) are adapted for generating and transmitting radio frequency OFDM signals having equal channel encoded symbol lengths and equal guard intervals between said OFMD symbols.

4. Communication system according to claims 1 and/or 2, **characterized in that** the uplink transmission unit (1A) and/or the downlink transmission unit (7A) comprise preamble adding means (17, 20; 79, 80) for generating and adding preambles to the transmitted radio frequency OFDM signals and that the uplink receiving unit (4) and/or the downlink receiving unit (11) comprises preamble evaluation means (43, 47; 113, 116) for detecting and evaluating the preambles in the received radio frequency OFDM signals.

5. Communication system according to claim 4, **characterized in that** the preamble adding means (17, 20; 79, 80) are adapted for adding preambles according to a Gold code.

6. Communication system according to claims 1 and 2, **characterized in that** the plurality of terminals and the access point are adapted for using a superframe structure for communicating input data and control data, a superframe comprising:

   - a downlink period (DL period) comprising downlink preambles and a number of downlink time slots for data and pilot tones,
   - an uplink period (UL period) comprising a number of uplink time slots for data and pilot tones, each uplink time slot being preceded by a downlink synchronization sequence for frequency/clock, phase, and timing adjustment for the following time slot and a transmission-reception turnaround interval for switching the terminal from receiver mode to transmitter mode and the access point from transmitter mode to receiver mode.

7. Communication system according to claim 6, **characterized in that** the downlink periods includes a number of bandwidth class specific common control channels for terminals of different bandwidths, the common control channels being used by the access point to transmit to the terminals:

- the duration of the current downlink period and of the following uplink period,
- identifiers of the terminals of the bandwidth class which are expected to receive data in the current downlink period and/or to transmit data in the following uplink period,
- updated downlink connection parameters for each active terminal,
- parameters of an uplink random access channel associated with the common control channel,
- an updated uplink transmission power,
- updated uplink connection parameters for each active terminal,
- information about frequency, phase and start time deviation of the received uplink channel encoded symbols from the common reference signal sent by the access point.

8. Communication system according to claims 1 and 2, **characterized in that** the plurality of terminals and the access point are adapted for enabling and performing direct peer-to-peer communications between terminals, wherein:

- the terminals are adapted for transmitting a peer-to-peer request to the access unit and for switching into receive mode or transmit mode for transmitting or receiving data using granted resources for the requested peer-to-peer communication, and
- the access unit is adapted for checking a peer-to-peer request and for granting resources for a direct peer-to-peer communications to a terminal upon a peer-to-peer request including the transmission of parameter information, in particular preambles, spreading code, scrambling code, sub-carriers, expiration time and/or duration, regarding the granted resources to the terminal.

9. Method for communicating in a communication system according to claim 1 comprising a plurality of terminals each having an uplink transmission unit (1) for transmitting radio frequency OFDM signals at a radio frequency and an access point having an uplink receiving unit (4) for concurrently receiving said radio frequency OFDM signals from at least two terminals, said OFDM signals being Orthogonal Frequency Division Multiplex (OFDM) modulated, **characterized in that** the bandwidth of said uplink transmission unit and of the transmitted radio frequency OFDM signals is smaller than the bandwidth of said uplink receiving unit and that the bandwidth of at least two uplink transmission units and of their transmitted radio frequency OFDM signals is different.

10. Method, in particular according to claim 9, for communicating in a communication system according to claim 2, wherein the access point has a downlink transmission unit (7) for transmitting radio frequency OFDM signals at a radio frequency and that the at least two terminals each have a downlink receiving unit (11) for receiving said radio frequency OFDM signals, wherein the downlink transmitting unit of said access unit is adapted for concurrently transmitting said radio frequency OFDM signals to said at least two downlink receiving units and wherein said downlink receiving units are adapted for receiving radio frequency OFDM signal concurrently sent from said downlink transmission unit,
**characterized in that** the bandwidth of said downlink transmission unit is larger than the bandwidth of said downlink receiving units and that the downlink transmission unit is adapted to generate and transmit radio frequency OFDM signals having a bandwidth that is smaller than or equal to the bandwidth of the downlink transmission unit and that is equal to the bandwidth of the downlink receiving unit by which the radio frequency OFDM signals shall be received.

11. Terminal for use in a communication system according to claim 1 comprising an uplink transmission unit (1) for transmitting radio frequency OFDM signals at a radio frequency for receiption by an access point having an uplink receiving unit (4) for concurrently receiving said radio frequency OFDM signals from at least two terminals, said OFDM signals being Orthogonal Frequency Division Multiplex (OFDM) modulated, **characterized in that** the bandwidth of said uplink transmission unit and of the transmitted radio frequency OFDM signals is smaller than the bandwidth of said uplink receiving unit.

12. Terminal according to claim 11, **characterized in that** the uplink transmission units (1) comprise:

- uplink OFDM modulation means (10, 11, 18, 19, 12) for converting input data signals for one or more connections with one or more terminals into a baseband OFDM signal having $N_{u\_tx}$ frequency sub-carriers spaced at a sub-carrier distance ($f_\Delta$), and
- uplink RF transmission means (16) for converting the baseband OFDM signal into the radio frequency OFDM signal and for transmitting said radio frequency OFDM signal having a bandwidth of $N_{u\_tx}$ times the sub-carrier distance ($f_\Delta$),

wherein said uplink OFDM modulation means and said uplink RF transmission means have a bandwidth of $N_{u\_tx}$

times the sub-carrier distance ($f_\Delta$).

13. Terminal according claim 12, **characterized in that** the uplink OFDM modulation means comprises:

- one or more uplink coding means (10, 11, 18) for deriving frequency domain OFDM source signals from the one or more input data signals, the frequency domain OFDM source signals comprising $N_{u\_tx}$ OFDM sub-carriers,
- uplink adding means (19) for adding the frequency domain OFDM source signals of the one or more connections, and
- uplink IFFT means (12) for performing a $N_{u\_tx}$ - point Inverse Fast Fourier transform operation on the added frequency domain OFDM source signals to obtain the baseband OFDM signal.

14. Terminal according to claim 13, **characterized in that** the uplink coding means comprises:

- uplink symbol generation means (10) for mapping bits of the one or more input data signals onto complex valued channel encoded symbols,
- uplink sub-carrier mapping means (11) for mapping the complex valued channel encoded symbols of the input data signals onto $N_{u\_tx}$ OFDM sub-carriers to obtain the frequency domain OFDM source signals, and
- uplink OVSF spreading and scrambling means (18) for applying an OVSF spreading code and a scrambling code on the frequency domain OFDM source signals.

15. Terminal according to claim 14, **characterized in that** the uplink OVSF spreading and scrambling means (18) of said plurality of terminals are adapted for applying a different OVSF spreading code for each connection within an uplink transmission unit and for applying a different scrambling code for each sub-carrier and each uplink transmission unit.

16. Terminal, in particular according to claim 11, for use in a communication system according to claim 2, comprising a downlink receiving unit (11) for receiving radio frequency OFDM signals transmitted by an access point having a downlink transmission unit (7) for concurrently transmitting radio frequency OFDM signals at a radio frequency to at least two terminals, **characterized in that** the bandwidth of said downlink transmission unit is larger than the bandwidth of said downlink receiving unit and that the downlink transmission unit is adapted to generate and transmit radio frequency OFDM signals having a bandwidth that is smaller than or equal to the bandwidth of the downlink transmission unit and that is equal to the bandwidth of the downlink receiving unit by which the radio frequency OFDM signals shall be received.

17. Terminal according to claim 16, **characterized in that** the downlink receiving unit (11) comprises:

- downlink RF reception means (110) for receiving a radio frequency OFDM signal and for converting the received radio frequency OFDM signal into a baseband OFDM signal, and
- downlink OFDM demodulation means (115, 122, 120, 121) for demodulating the baseband OFDM signal into one or more output data signals of one or more connections,

wherein said downlink RF reception means and said downlink OFDM demodulation means have a bandwidth of $N_{d\_rx}$ times the sub-carrier distance ($f_\Delta$), wherein $N_{d\_rx}$ is equal to or smaller than $N_{d\_tx}$.

18. Terminal according claim 17, **characterized in that** the downlink OFDM demodulation means comprises:

- downlink FFT means (115) for performing a $N_{d\_rx}$ - point Fast Fourier Transform operation on the baseband OFDM signal to obtain a frequency domain OFDM signal, the frequency domain OFDM signal comprising $N_{d\_rx}$ frequency sub-carriers, and
- downlink decoding means (122, 120, 121) for deriving the one or more output data signals from the frequency domain OFDM signal.

19. Terminal according to claim 18, **characterized in that** the downlink decoding means comprises:

- downlink OVSF despreading and descrambling means (122) for despreading and descrambling the $N_{d\_rx}$ frequency sub-carriers to obtain the OFDM signals of the one or more connections carried in the $N_{d\_rx}$ frequency sub-carriers,
- downlink sub-carrier demapping means (120) for demapping the despreaded and descrambled $N_{d\_rx}$ frequency sub-carriers of the frequency domain OFDM signal of said one or more connections onto complex valued channel coded symbols, and
- one or more downlink channel decoding and deinterleaving means (121) for one or more connections for demapping the complex valued channel coded symbols onto bits of the one or more output data signals.

20. Terminal according to claims 15 and 19, **characterized in that** the uplink OVSF spreading and scrambling means (122) are adapted for applying an OVSF spreading code along the sub-carriers or across the sub-carriers followed by scrambling of the frequency domain OFDM source signals and that the downlink OVSF despreading and descrambling means are adapted for descrambling and despreading the $N_{d\_rx}$ frequency sub-carriers per sub-carrier or across all used sub-carriers.

21. Access point for use in a communication system according to claim 1 comprising an uplink receiving unit (4) for concurrently receiving radio frequency OFDM signals from at least two terminals having an uplink transmission unit (1) for transmitting radio frequency OFDM signals at a radio frequency, said OFDM signals being Orthogonal Frequency Division Multiplex (OFDM) modulated, **characterized in that** the bandwidth of said uplink transmission unit and of the transmitted radio frequency OFDM signals is smaller than the bandwidth of said uplink receiving unit.

22. Access point according to claim 1, **characterized in that** the uplink receiving unit comprises:

  - uplink RF reception means (40) for receiving a radio frequency OFDM signal and for converting the received radio frequency OFDM signal into a baseband OFDM signal, and
  - uplink OFDM demodulation means (45, 46, 51, 52) for demodulating the baseband OFDM signal into one or more output data signals of one or more connections with one or more terminals,

wherein said uplink RF receiption means and said uplink OFDM demodulation means have a bandwidth of $N_{u\_rx}$ times the sub-carrier distance $(f_\Delta)$, wherein $N_{u\_rx}$ is equal to or larger than $N_{u\_tx}$ of said plurality of terminals.

23. Access point according claim 22, **characterized in that** the uplink OFDM demodulation means comprises:

  - uplink FFT means (45) for performing a $N_{u\_rx}$ - point Fast Fourier Transform operation on the baseband OFDM signal to obtain a frequency domain OFDM signal, the frequency domain OFDM signal comprising $N_{u\_rx}$ OFDM sub-carriers, and
  - one or more uplink restoration means (46, 56, 51, 52) for deriving the one or more output data signals from the frequency domain OFDM signal.

24. Access point according to claim 23, **characterized in that** the uplink OFDM demodulation means comprises P uplink restoration means (46s, 56s, 51s, 52s, 46t, 56t, 51t, 52t), P being an integer larger than one, for concurrently deriving P output data signals transmitted from P different terminals from the frequency domain OFDM signal, the bandwidths of said P uplink restoration means being different and adapted to the different bandwidths of the plurality of terminals.

25. Access point according to claim 23, **characterized in that** the uplink OFDM demodulation means comprises one uplink restoration means (46, 51, 52) for deriving an output data signal from the frequency domain OFDM signal, the bandwidth of said uplink restoration means being adaptable to the bandwidth of the terminal from which said data signal has been transmitted.

26. Access point according to claim 23, **characterized in that** the uplink restoration means comprises:

  - uplink reconstruction means (46) for reconstructing $N_{u\_tx}$ sent OFDM sub-carriers from the received $N_{u\_rx}$ OFDM sub-carriers of the frequency domain OFDM signal,

wherein the $N_{u\_tx}$ frequency sub-carriers represent the concurrently received radio frequency OFDM signals,

  - uplink OVSF despreading and descrambling means (56) for despreading and descrambling the reconstructed $N_{u\_tx}$ frequency sub-carriers to obtain the OFDM signals of the one or more connections carried in the reconstructed $N_{u\_tx}$ frequency sub-carriers,
  - uplink sub-carrier demapping means (51) for demapping the despreaded and descrambled $N_{u\_tx}$ frequency sub-carriers of the frequency domain OFDM signal of one or more connections onto complex valued channel coded symbols, and
- one or more uplink channel decoding and deinterleaving means (52) for one or more connections for demapping the complex valued channel coded symbols onto bits of the output data signal.

**27.** Access point according to claim 26, **characterized in that** the uplink reconstruction means (46) is adapted for reconstructing the $N_{u\_tx}$ frequency sub-carriers from the $N_{u\_rx}$ frequency sub-carriers of the frequency domain OFDM signal by selecting essentially the $N_{u\_tx}/2$ first and the $N_{u\_tx}/2$ last sub-carriers of the frequency domain $N_{u\_rx}$ point OFDM signal.

**28.** Access point according to claims 21, **characterized in that** the uplink receiving unit (4A) comprises:

- first uplink decoding means (43, 47 to 52, 56) for deriving a first data signal from the frequency domain OFDM signal received from a terminal of a first communication system and
- second uplink decoding means (53, 54) for deriving a second data signal from the frequency domain OFDM signal received from a terminal of a second communication system different from the first communication system.

**29.** Access point, in particular according to claim 21, for use in a communication system according to claim 2, comprising a downlink transmission unit (7) for concurrently transmitting radio frequency OFDM signals at a radio frequency to at least two terminals having a downlink receiving unit (11) for receiving said radio frequency OFDM signals, **characterized in that** the bandwidth of said downlink transmission unit is larger than the bandwidth of said downlink receiving unit and that the downlink transmission unit is adapted to generate and transmit radio frequency OFDM signals having a bandwidth that is smaller than or equal to the bandwidth of the downlink transmission unit and that is equal to the bandwidth of the downlink receiving unit by which the radio frequency OFDM signals shall be received.

**30.** Access point according to claim 29, **characterized in that** the downlink transmission unit (7) comprises:

- downlink OFDM modulation means (70, 71, 82, 83, 73, 74) for converting one or more input data signals for one or more connections with a terminal into a baseband OFDM signal having $N_{d\_tx}$ frequency sub-carriers spaced at a sub-carrier distance ($f_\Delta$), using $N_{d\_rx}$ of said $N_{d\_tx}$ frequency sub-carriers for modulation of the input data signals, $N_{d\_rx}$ being equal to or smaller than $N_{d\_tx}$, and
- downlink RF transmission means (78) for converting the baseband OFDM signal into the radio frequency OFDM signal and for transmitting said radio frequency OFDM signal having a bandwidth of $N_{d\_tx}$ times the sub-carrier distance ($f_\Delta$),

wherein said downlink OFDM modulation means and said downlink RF transmission means have a bandwidth of $N_{d\_tx}$ times the sub-carrier distance ($f_\Delta$).

**31.** Access point according claim 30, **characterized in that** the downlink OFDM modulation means comprises:

- one or more downlink coding means (70, 71, 82) for deriving one or more frequency domain OFDM source signals from the one or more input data signals, the frequency domain OFDM source signals comprising $N_{d\_rx}$ OFDM sub-carriers, $N_{d\_rx}$ times the sub-carrier distance ($f_\Delta$) being the bandwidth of the terminal to which an input data signal shall be transmitted,
- first downlink adding means (83) for adding the frequency domain OFDM source signals of the one or more connections,
- downlink construction means (73) for obtaining $N_{d\_tx}$ frequency sub-carriers from the $N_{d\_rx}$ frequency sub-carriers of the added frequency domain OFDM source signals, and
- downlink IFFT means (74) for performing a $N_{d\_tx}$ - point Inverse Fast Fourier Transform operation on the $N_{d\_tx}$ frequency sub-carriers of the added frequency domain OFDM source signals to obtain the baseband OFDM signal.

**32.** Access point according to claim 31, **characterized in that** the downlink coding means comprises:

- downlink symbol generation means (70) for mapping bits of the one or more input data signal onto complex valued channel encoded symbols,
- downlink sub-carrier mapping means (71) for mapping the complex valued channel encoded symbols of the input data signals onto $N_{d\_rx}$ OFDM sub-carriers to obtain the frequency domain OFDM source signals, and
- downlink OVSF spreading and scrambling means (83) for applying an OVSF spreading code and a scrambling code on the frequency domain OFDM source signals.

**33.** Access point according to claim 31 or 32, **characterized in that** the downlink OFDM modulation means comprises:

- one or more MT downlink coding means (70s, 71s, 82s, 70t, 71t, 82t) each comprising one or more of said downlink coding means, one first downlink adding means and one downlink construction means, wherein the MT downlink coding means are adapted for different bandwidths of different terminals,
- second downlink adding means (84) for adding the frequency sub-carrier signals provided by said MT downlink coding means.

**34.** Access point according to claim 31, **characterized in that** the downlink construction means (73) is adapted for obtaining the baseband OFDM signal by mapping essentially the $N_{d\_rx}/2$ first sub-carriers onto the $N_{d\_rx}/2$ first sub-carriers and the $N_{d\_rx}/2$ last sub-carriers onto the $N_{d\_rx}/2$ last sub-carriers of the frequency domain $N_{d\_tx}$ OFDM signal and by setting the remaining $N_{d\_tx} - N_{d\_rx}$ unused sub-carriers to zero.

**35.** Access point according to claims 26 and 32, **characterized in that** the uplink OVSF despreading and descrambling means (56) are adapted for descrambling and despreading the $N_{d\_rx}$ frequency sub-carriers per sub-carrier or across all used sub-carriers and that the downlink OVSF spreading and scrambling means (82) are adapted for applying an OVSF spreading code along the sub-carriers or across the sub-carriers followed by scrambling of the frequency domain OFDM source signals.

**36.** Access point according to claims 21 and 29, **characterized in that** the uplink receiving unit (4) and the downlink transmission unit (7) of the access point are adapted for receiving and transmitting, respectively, of radio frequency OFDM signals having different bandwidths.

**37.** Access point according to claims 29, **characterized in that** the downlink transmission unit (7B) comprises:

- first downlink coding means (70, 71, 82) for deriving a first frequency domain OFDM source signal from the data signal for transmission to a terminal of a first communication system and
- second downlink coding means (81) for deriving a second frequency domain OFDM source signal from the data signal for transmission to a terminal of a second communication system different from the first communication system.

**38.** Access point according to claims 21 and 29, **characterized in that** the downlink transmission unit (7) comprises indicator transmission means (78) for transmitting an indicator signal, in particular a continuous cosine waveform having a frequency close to a DC sub-carrier, indicating the presence or absence of a second communication system, in particular a legacy OFDM communication system, for reception and evaluation by the downlink receiving unit (11) comprising indicator receiving means (110) for receiving and evaluating said indicator signal.

FIG.1

FIG.2

FIG.3

FIG.4

GP with
with $N_{u\_rx\_gp}$
sampling
points

Original time domain OFDM symbol
with $N_{u\_rx}$ sampling points

Time index

$\Downarrow$ GP Remover

Original time domain OFDM symbol
with $N_{u\_rx}$ sampling points

Time index

FIG.5

AP receiver based
FFT Index

$0$      $N_{u\_tx\_t}/2-1$      $N_{u\_rx}-N_{u\_tx\_t}/2$      $N_{u\_rx}-1$

$0$      $N_{u\_tx\_t}-1$      MT transmitter based
FFT Index

FIG.6

FIG.7

FIG.8

FIG.9

FIG.10

EP 1 876 730 A1

**FIG.11**

GP with
with $N_{d\_rx\_gp}$
sampling
points

Original time domain OFDM symbol
with $N_{d\_rx\_gp}$ sampling points

Time index

⇩ GP Remover

Original time domain OFDM symbol
with $N_{rx}$ sampling points

Time index

FIG.12

FIG.13

FIG.14

FIG.15

**FIG.16**

Frequency →

| A1(i)c1<br>+<br>B1(i)d1 | A2(i)c1<br>+<br>B2(i)d1 | A3(i)c1<br>+<br>B3(i)d1 | A4(i)c1<br>+<br>B4(i)d1 | A5(i)c1<br>+<br>B5(i)d1 | A6(i)c1<br>+<br>B6(i)d1 | A7(i)c1<br>+<br>B7(i)d1 | A8(i)c1<br>+<br>B8(i)d1 | 160 |
| A1(i)c2<br>+<br>B1(i)d2 | A2(i)c2<br>+<br>B2(i)d2 | A3(i)c2<br>+<br>B3(i)d2 | A4(i)c2<br>+<br>B4(i)d2 | A5(i)c2<br>+<br>B5(i)d2 | A6(i)c2<br>+<br>B6(i)d2 | A7(i)c2<br>+<br>B7(i)d2 | A8(i)c2<br>+<br>B8(i)d2 | 161 |
| A1(i)c3<br>+<br>B1(i)d3 | A2(i)c3<br>+<br>B2(i)d3 | A3(i)c3<br>+<br>B3(i)d3 | A4(i)c3<br>+<br>B4(i)d3 | A5(i)c3<br>+<br>B5(i)d3 | A6(i)c3<br>+<br>B6(i)d3 | A7(i)c3<br>+<br>B7(i)d3 | A8(i)c3<br>+<br>B8(i)d3 | 162 |
| A1(i)c4<br>+<br>B1(i)d4 | A2(i)c4<br>+<br>B2(i)d4 | A3(i)c4<br>+<br>B3(i)d4 | A4(i)c4<br>+<br>B4(i)d4 | A5(i)c4<br>+<br>B5(i)d4 | A6(i)c4<br>+<br>B6(i)d4 | A7(i)c4<br>+<br>B7(i)d4 | A8(i)c4<br>+<br>B8(i)d4 | 163 |

| A1(i+4)c1<br>+<br>B1(i)d5 | A2(i+4)c1<br>+<br>B2(i)d5 | A3(i+4)c1<br>+<br>B3(i)d5 | A4(i+4)c1<br>+<br>B4(i)d5 | A5(i+4)c1<br>+<br>B5(i)d5 | A6(i+4)c1<br>+<br>B6(i)d5 | A7(i+4)c1<br>+<br>B7(i)d5 | A8(i+4)c1<br>+<br>B8(i)d5 | 164 |
| A1(i+4)c2<br>+<br>B1(i)d6 | A2(i+4)c2<br>+<br>B2(i)d6 | A3(i+4)c2<br>+<br>B3(i)d6 | A4(i+4)c2<br>+<br>B4(i)d6 | A5(i+4)c2<br>+<br>B5(i)d6 | A6(i+4)c2<br>+<br>B6(i)d6 | A7(i+4)c2<br>+<br>B7(i)d6 | A8(i+4)c2<br>+<br>B8(i)d6 | 165 |
| A1(i+4)c3<br>+<br>B1(i)d7 | A2(i+4)c3<br>+<br>B2(i)d7 | A3(i+4)c3<br>+<br>B3(i)d7 | A4(i+4)c3<br>+<br>B4(i)d7 | A5(i+4)c3<br>+<br>B5(i)d7 | A6(i+4)c3<br>+<br>B6(i)d7 | A7(i+4)c3<br>+<br>B7(i)d7 | A8(i+4)c3<br>+<br>B8(i)d7 | 166 |
| A1(i+4)c4<br>+<br>B1(i)d8 | A2(i+4)c4<br>+<br>B2(i)d8 | A3(i+4)c4<br>+<br>B3(i)d8 | A4(i+4)c4<br>+<br>B4(i)d8 | A5(i+4)c4<br>+<br>B5(i)d8 | A6(i+4)c4<br>+<br>B6(i)d8 | A7(i+4)c4<br>+<br>B7(i)d8 | A8(i+4)c4<br>+<br>B8(i)d8 | 167 |

Time ↓

EP 1 876 730 A1

Frequency →

| (A1(i)c1 + B1(i)d1)s1,1 | (A2(i)c1 + B2(i)d1)s2,1 | (A3(i)c1 + B3(i)d1)s3,1 | (A4(i)c1 + B4(i)d1)s4,1 | (A5(i)c1 + B5(i)d1)s5,1 | (A6(i)c1 + B6(i)d1)s6,1 | (A7(i)c1 + B7(i)d1)s7,1 | (A8(i)c1 + B8(i)d1)s8,1 | ~170 |
|---|---|---|---|---|---|---|---|---|
| (A1(i)c2 + B1(i)d2)s1,2 | (A2(i)c2 + B2(i)d2)s2,2 | (A3(i)c2 + B3(i)d2)s3,2 | (A4(i)c2 + B4(i)d2)s4,2 | (A5(i)c2 + B5(i)d2)s5,2 | (A6(i)c2 + B6(i)d2)s6,2 | (A7(i)c2 + B7(i)d2)s7,2 | (A8(i)c2 + B8(i)d2)s8,2 | ~171 |
| (A1(i)c3 + B1(i)d3)s1,3 | (A2(i)c3 + B2(i)d3)s2,3 | (A3(i)c3 + B3(i)d3)s3,3 | (A4(i)c3 + B4(i)d3)s4,3 | (A5(i)c3 + B5(i)d3)s5,3 | (A6(i)c3 + B6(i)d3)s6,3 | (A7(i)c3 + B7(i)d3)s7,3 | (A8(i)c3 + B8(i)d3)s8,3 | ~172 |
| (A1(i)c4 + B1(i)d4)s1,4 | (A2(i)c4 + B2(i)d4)s2,4 | (A3(i)c4 + B3(i)d4)s3,4 | (A4(i)c4 + B4(i)d4)s4,4 | (A5(i)c4 + B5(i)d4)s5,4 | (A6(i)c4 + B6(i)d4)s6,4 | (A7(i)c4 + B7(i)d4)s7,4 | (A8(i)c4 + B8(i)d4)s8,4 | ~173 |
| (A1(i+4)c1 + B5(i)d5)s1,5 | (A2(i+4)c1 + B2(i)d5)s2,5 | (A3(i+4)c1 + B3(i)d5)s3,5 | (A4(i+4)c1 + B4(i)d5)s4,5 | (A5(i+4)c1 + B5(i)d5)s5,5 | (A6(i+4)c1 + B6(i)d5)s6,5 | (A7(i+4)c1 + B7(i)d5)s7,5 | (A8(i+4)c1 + B8(i)d5)s8,5 | ~174 |
| (A1(i+4)c2 + B1(i)d6)s1,6 | (A2(i+4)c2 + B2(i)d6)s2,6 | (A3(i+4)c2 + B3(i)d6)s3,6 | (A4(i+4)c2 + B4(i)d6)s4,6 | (A5(i+4)c2 + B5(i)d6)s5,6 | (A6(i+4)c2 + B6(i)d6)s6,6 | (A7(i+4)c2 + B7(i)d6)s7,6 | (A8(i+4)c2 + B8(i)d6)s8,6 | ~175 |
| (A1(i+4)c3 + B1(i)d7)s1,7 | (A2(i+4)c3 + B2(i)d7)s2,7 | (A3(i+4)c3 + B3(i)d7)s3,7 | (A4(i+4)c3 + B4(i)d7)s4,7 | (A5(i+4)c3 + B5(i)d7)s5,7 | (A6(i+4)c3 + B6(i)d7)s6,7 | (A7(i+4)c3 + B7(i)d7)s7,7 | (A8(i+4)c3 + B8(i)d7)s8,7 | ~176 |
| (A1(i+4)c4 + B1(i)d8)s1,8 | (A2(i+4)c4 + B2(i)d8)s2,8 | (A3(i+4)c4 + B3(i)d8)s3,8 | (A4(i+4)c4 + B4(i)d8)s4,8 | (A5(i+4)c4 + B5(i)d8)s5,8 | (A6(i+4)c4 + B6(i)d8)s6,8 | (A7(i+4)c4 + B7(i)d8)s7,8 | (A8(i+4)c4 + B8(i)d8)s8,8 | ~177 |

Time ↓

FIG.17

| C1 | | C2 | | C3 | | C4 | | C1 | | C2 | | C3 | | C4 |

→ Frequency

| A1(i) | X | X | X | A5(i) | X | X | X | ~180

↓

OVSF spreading at time i

| A1(i)c1 | A1(i)c2 | A1(i)c3 | A1(i)c4 | A5(i)c1 | A5(i)c2 | A5(i)c3 | A5(i)c4 | ~181

FIG.18

EP 1 876 730 A1

Frequency →

| A1(i)c1<br>+<br>B1(i)d1 | A1(i)c2<br>+<br>B2(i)d2 | A1(i)c3<br>+<br>B1(i)d3 | A1(i)c4<br>+<br>B1(i)d4 | A5(i)c1<br>+<br>B1(i)d5 | A5(i)c2<br>+<br>B1(i)d6 | A5(i)c3<br>+<br>B1(i)d7 | A5(i)c4<br>+<br>B1(i)d8 |
|---|---|---|---|---|---|---|---|

— 190

## FIG.19

Frequency →

| (A1(i)c1<br>+<br>B1(i)d1)s1,1 | (A2(i)c2<br>+<br>B1(i)d2)s2,1 | (A3(i)c3<br>+<br>B1(i)d3)s3,1 | (A4(i)c4<br>+<br>B1(i)d4)s4,1 | (A5(i)c1<br>+<br>B1(i)d5)s5,1 | (A5(i)c2<br>+<br>B1(i)d6)s6,1 | (A5(i)c3<br>+<br>B1(i)d7)s7,1 | (A5(i)c4<br>+<br>B1(i)d8)s8,1 |
|---|---|---|---|---|---|---|---|
| (A1(i+1)c1<br>+<br>B1(i+1)d1)s1,2 | (A1(i+1)c2<br>+<br>B1(i+1)d2)s2,2 | (A1(i+1)c3<br>+<br>B1(i+1)d3)s3,2 | (A1(i+1)c4<br>+<br>B1(i+1)d4)s4,2 | (A5(i+1)c1<br>+<br>B1(i+1)d5)s5,2 | (A5(i+1)c2<br>+<br>B1(i+1)d6)s6,2 | (A5(i+1)c3<br>+<br>B1(i+1)d7)s7,2 | (A5(i+1)c4<br>+<br>B1(i+1)d8)s8,2 |
| (A1(i+2)c1<br>+<br>B1(i+2)d1)s1,3 | (A1(i+2)c2<br>+<br>B1(i+2)d2)s2,3 | (A1(i+2)c3<br>+<br>B1(i+2)d3)s3,3 | (A1(i+2)c4<br>+<br>B1(i+2)d4)s4,3 | (A5(i+2)c1<br>+<br>B1(i+2)d5)s5,3 | (A5(i+2)c2<br>+<br>B1(i+2)d6)s6,3 | (A5(i+2)c3<br>+<br>B1(i+2)d7)s7,3 | (A5(i+2)c4<br>+<br>B1(i+1)d8)s8,3 |
| (A1(i+3)c1<br>+<br>B1(i+3)d1)s1,4 | (A1(i+3)c2<br>+<br>B1(i+3)d2)s2,4 | (A1(i+3)c3<br>+<br>B1(i+3)d3)s3,4 | (A1(i+3)c4<br>+<br>B1(i+3)d4)s4,4 | (A5(i+3)c1<br>+<br>B1(i+3)d5)s5,4 | (A5(i+3)c2<br>+<br>B1(i+3)d6)s6,4 | (A5(i+3)c3<br>+<br>B1(i+3)d7)s7,4 | (A5(i+3)c4<br>+<br>B1(i+3)d8)s8,4 |

— 200
— 201
— 202
— 203

Time ↓

## FIG.20

Bandwidth
Class $k_{min}$

$\vdots$    $\vdots$

Bandwidth Class $k_{max}$-1

Bandwidth Class $k_{max}$

$-N\,f_{\Delta}/2$          $N\,f_{\Delta}/2$-1

Frequency

FIG.21

FIG.22A

FIG.22B

FIG.22C

EP 1 876 730 A1

1A

Connection i data → Channel Encoder & Interleaver (10i) → A1i → Sub-carrier Mapper (11i) → B1i → OVSF Spreader & Scrambler (18i) → C1i

Connection j data → Channel Encoder & Interleaver (10j) → A1j → Sub-carrier Mapper (11j) → B1j → OVSF Spreader & Scrambler (18j) → C1j

⊕ (19) → $N_{u\_tx}$ point IFFT (12)

GP Inserter (13)

20

RF Frontend (BW=$N_{u\_tx}f_\Delta$) (16) ← DAC (15) ← Power Shaping LPF (BW=$N_{u\_tx}f_\Delta$) (14) ←

Time Domain Preamble Generator (17)

FIG.23

FIG.24

FIG.25

FIG.26

FIG.27

FIG.28

FIG.29

**European Patent Office**

## EUROPEAN SEARCH REPORT

Application Number

EP 06 11 6641

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 622 295 A (DISENO DE SISTEMAS EN SILICIO S.A) 1 February 2006 (2006-02-01) <br><br> * claim 1; tables 5-13 * <br> ----- | 1,2, 9-11,16, 21,29 | INV. <br> H04B7/26 |
| A | EP 0 869 647 A (LUCENT TECHNOLOGIES INC) 7 October 1998 (1998-10-07) <br> * page 3, line 15 - page 4, line 2 * <br> ----- | 1-38 | |
| A | US 2006/083211 A1 (LAROIA RAJIV ET AL) 20 April 2006 (2006-04-20) <br> * claim 1 * <br> ----- | 1-38 | |
| A | US 2006/140293 A1 (LAI KO-YIN ET AL) 29 June 2006 (2006-06-29) <br> * claim 1 * <br> ----- | 1-38 | |
| A | EP 0 760 564 A (TELIA AB) 5 March 1997 (1997-03-05) <br> * page 2, line 3 - line 38; claim 26 * <br> ----- | 1-38 | |

TECHNICAL FIELDS SEARCHED (IPC)

H04B

The present search report has been drawn up for all claims

| Place of search | Date of completion of the search | Examiner |
|---|---|---|
| The Hague | 16 October 2006 | Bischof, Jean-Louis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 06 11 6641

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2006

| Patent document cited in search report | | | Publication date | Patent family member(s) | | | Publication date |
|---|---|---|---|---|---|---|---|
| EP 1622295 | A | | 01-02-2006 | AU | 2004237320 | A1 | 18-11-2004 |
| | | | | BR | PI0410006 | A | 25-04-2006 |
| | | | | CA | 2522992 | A1 | 18-11-2004 |
| | | | | CN | 1784847 | A | 07-06-2006 |
| | | | | ES | 2220208 | A1 | 01-12-2004 |
| | | | | WO | 2004100412 | A1 | 18-11-2004 |
| | | | | MX | PA05010780 | A | 12-12-2005 |
| | | | | US | 2006062318 | A1 | 23-03-2006 |
| EP 0869647 | A | | 07-10-1998 | DE | 69806670 | D1 | 29-08-2002 |
| | | | | DE | 69806670 | T2 | 27-02-2003 |
| | | | | JP | 3712522 | B2 | 02-11-2005 |
| | | | | JP | 10303849 | A | 13-11-1998 |
| | | | | US | 6175550 | B1 | 16-01-2001 |
| US 2006083211 | A1 | | 20-04-2006 | WO | 2006044489 | A1 | 27-04-2006 |
| US 2006140293 | A1 | | 29-06-2006 | NONE | | | |
| EP 0760564 | A | | 05-03-1997 | DE | 69631625 | D1 | 01-04-2004 |
| | | | | DE | 69631625 | T2 | 03-02-2005 |
| | | | | DK | 760564 | T3 | 05-07-2004 |
| | | | | NO | 963489 | A | 03-03-1997 |
| | | | | SE | 515752 | C2 | 08-10-2001 |
| | | | | SE | 9502963 | A | 01-03-1997 |
| | | | | US | 5909436 | A | 01-06-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. HANZO ; M. MUENSTER ; B.J. CHOI ; T. KEL-LER.** OFDM and MC-CDMA for Broadband Multi-User Communications, WLANs and Broadcasting. John Wiley & Sons, June 2004